(19) Europäisches Patentamt / European Patent Office / Office européen des brevets

(11) **EP 4 013 910 B1**

(12) # EUROPEAN PATENT SPECIFICATION


(45) Date of publication and mention of the grant of the patent:
**05.04.2023 Bulletin 2023/14**

(21) Application number: **20760547.8**

(22) Date of filing: **10.08.2020**

(51) International Patent Classification (IPC):
***D01F 8/16*** *(2006.01)* ***B33Y 70/00*** *(2015.01)*

(52) Cooperative Patent Classification (CPC):
**D01F 8/16; B33Y 70/00**

(86) International application number:
**PCT/IB2020/057518**

(87) International publication number:
**WO 2021/028821 (18.02.2021 Gazette 2021/07)**


(54) **CORE-SHEATH FILAMENT WITH A SILICONE-CONTAINING BLOCK COPOLYMER CORE**

KERN-HÜLLE-FILAMENT MIT EINEM SILIKONHALTIGEN BLOCKCOPOLYMERKERN

FILAMENT À COEUR-GAINE AVEC UN NOYAU DE COPOLYMÈRE SÉQUENCÉ CONTENANT DE LA SILICONE


(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **15.08.2019 US 201962887038 P**

(43) Date of publication of application:
**22.06.2022 Bulletin 2022/25**



(73) Proprietor: **3M Innovative Properties Company**
**Saint Paul, Minnesota 55133-3427 (US)**

(72) Inventors:
- **BEHLING, Ross E.**
  **Saint Paul, Minnesota 55133-3427 (US)**
- **BENSON, Karl E.**
  **Saint Paul, Minnesota 55133-3427 (US)**
- **CHASTEK, Thomas Q.**
  **Saint Paul, Minnesota 55133-3427 (US)**
- **NAPIERALA, Mark E.**
  **Saint Paul, Minnesota 55133-3427 (US)**
- **HAYS, David S.**
  **Saint Paul, Minnesota 55133-3427 (US)**
- **HACKBARTH, Kent C.**
  **Saint Paul, Minnesota 55133-3427 (US)**
- **YOUNG, Jacob D.**
  **Saint Paul, Minnesota 55133-3427 (US)**
- **WEST, Shaun M.**
  **Saint Paul, Minnesota 55133-3427 (US)**
- **CARVAJAL, Daniel**
  **Saint Paul, Minnesota 55133-3427 (US)**

(74) Representative: **Bergen, Katja**
**3M Deutschland GmbH**
**OIPC**
**Carl-Schurz-Strasse 1**
**41453 Neuss (DE)**



(56) References cited:
**WO-A1-99/28402** **WO-A1-99/28540**
**WO-A1-2013/022913** **WO-A1-2017/009190**
**WO-A2-02/090628** **WO-A2-2005/005701**
**US-A1- 2008 318 057** **US-A1- 2014 322 512**
**US-A1- 2017 252 980**



Note: Within nine months of the publication of the mention of the grant of the European patent in the European Patent Bulletin, any person may give notice to the European Patent Office of opposition to that patent, in accordance with the Implementing Regulations. Notice of opposition shall not be deemed to have been filed until the opposition fee has been paid. (Art. 99(1) European Patent Convention).


EP 4 013 910 B1

## Description

### Technical Field

A core-sheath filament having a pressure-sensitive adhesive core and a non-tacky sheath, methods of making the core-sheath filament, and methods of using the core-sheath filament to print a pressure-sensitive adhesive are described.

### Background

The use of fused filament fabrication (FFF) to produce three-dimensional articles has been known for a relatively long time, and these processes are generally known as methods of so-called 3D printing (or additive manufacturing). In FFF, a plastic filament is melted in a moving printhead to form a printed article in a layer-by-layer, additive manner. The filaments are often composed of polylactic acid, nylon, polyethylene terephthalate (typically glycol-modified), or acrylonitrile butadiene styrene.

Silicone-based pressure-sensitive adhesives have been used in various applications.

WO02/090628 A2 describes pressure-sensitive adhesive fibres which can be core-sheath fibres having a polyurethane sheath. The core might be a pressure-sensitive adhesive that can comprise a silicone.

### Summary

A core-sheath filament having a pressure-sensitive adhesive core and a non-tacky sheath is provided. The pressure-sensitive adhesive in the core includes a silicone-base pressure-sensitive adhesive. Additionally, methods of making the core-sheath filament and methods of using the core-sheath filament to print a pressure-sensitive adhesive are described. The core-sheath filaments having a pressure-sensitive adhesive core can be used in place of transfer adhesives to attach one substrate to another. The use of these core-sheath filaments can eliminate the cost and waste associated with release liners that are needed for transfer adhesives.

In a first aspect, a core-sheath filament is provided that includes a) a core containing a pressure-sensitive adhesive and b) a sheath surrounding the core. The pressure-sensitive adhesive in the core contains 1) 45 to 80 weight percent of a silicone-containing block copolymer and 2) 20 to 55 weight percent of a silicone tackifying resin based on a total weight of the core. The silicone-containing block copolymer includes a first block containing a polydiorganosiloxane and a second block that is free of a silicone. The sheath contains a non-tacky thermoplastic material that is free of a silicone. The core-sheath filament has a longest cross-sectional distance in a range of 1 to 20 millimeters.

In a second aspect, a method of making a core-sheath filament is provided. The method includes forming a core composition that is a pressure-sensitive adhesive. The pressure-sensitive adhesive contains 1) 45 to 80 weight percent of a silicone-containing block copolymer and 2) 20 to 55 weight percent of a silicone tackifying resin based on a total weight of the core. The silicone-containing block copolymer includes a first block containing a polydiorganosiloxane and a second block that is free of a silicone. The method further includes forming a sheath composition comprising a non-tacky thermoplastic material that is free of a silicone. The method still further includes wrapping the sheath composition around the core composition, wherein the core-sheath filament has a longest cross-sectional distance in a range of 1 to 20 millimeters.

In a third aspect, a method of printing a pressure-sensitive adhesive is provided. The method includes forming a core-sheath filament as described above in the second aspect, melting and mixing the core-sheath filament to form a molten composition, and dispensing the molten composition onto a substrate. The substrate is typically not a release liner.

The above summary of the present disclosure is not intended to describe each disclosed embodiment or every implementation of the present disclosure. The description that follows more particularly exemplifies illustrative embodiments. In several places throughout the application, guidance is provided through lists of examples, which examples can be used in various combinations. In each instance, the recited list serves only as a representative group and should not be interpreted as an exclusive list.

### Brief Description of the Drawings

FIG. 1 is a schematic perspective exploded view of a section of a core-sheath filament, according to an embodiment of the present disclosure.

FIG. 2 is a schematic cross-sectional view of a core-sheath filament, according to an embodiment of the present disclosure.

## Detailed Description

A core-sheath filament having a pressure-sensitive adhesive core and a non-tacky sheath that surrounds the core is provided. The pressure-sensitive adhesive core includes a) a silicone-containing block copolymer having multiple polydiorganosiloxane segments plus b) a silicone tackifying resin. The sheath contains a thermoplastic material that is free of a silicone. The core-sheath filaments can be used in place of transfer adhesives to attach one substrate to another. The use of these core-sheath filaments can eliminate the cost and waste associated with release liners that are needed for transfer adhesives.

Adhesive transfer tapes have been used extensively for adhering a first substrate to a second substrate. Adhesive transfer tapes are typically provided in rolls and contain a pressure-sensitive adhesive layer positioned on a two-side coated differential release liner or between two release liners. Unlike rubber-based or (meth)acrylic-based pressure-sensitive adhesives that can be positioned next to a relatively inexpensive release liner in adhesive transfer tape constructions, silicone-based pressure-sensitive adhesives typically require relatively expensive fluorinated release liners such as fluorosilicone or fluoropolymer-based release liners. When the fluorinated release liner is removed from the silicone-based pressure sensitive adhesive layer, some of the fluorinated material can transfer to the silicone-based pressure sensitive adhesive layer rather than remaining bound to the fluorinated release liner. This transfer can substantially reduce the subsequent adhesive strength (subsequent peel from a substrate), also known as readhesion, of the pressure-sensitive adhesive layer. It has also been shown that many silicone-based pressure-sensitive adhesives tend to have increased adhesion over time to fluorinated release liners leading to unacceptably high release forces. The difficulty in finding suitable, yet cost-effective, release materials has proven to be one of the major issues inhibiting the widespread adoption of silicone-based pressure-sensitive adhesives. Thus, it can be highly desirable to avoid the use of release liners for silicone-based pressure-sensitive adhesives. The core-sheath filaments described herein can be used to deliver a silicone-based pressure-sensitive adhesive without the use of a release liner. The non-tacky sheath allows for easy handling of the silicone-based pressure-sensitive adhesive before deposition on a substrate.

Adhesive transfer tapes have been used extensively for adhering a first substrate to a second substrate. Adhesive transfer tapes are typically provided in rolls and contain a pressure-sensitive adhesive layer positioned on a two-side coated differential release liner or between two release liners. The transfer adhesive tapes often need to be die-cut to the desired size and shape prior to application to a substrate. The transfer adhesive tape that is outside the die-cut area is discarded as waste. The use of the core-sheath filaments described herein as the adhesive composition can substantially reduce the waste often associated with adhesive transfer tapes. No die-cutting is required because the adhesive can be deposited (e.g., printed) only in the desired area.

The core-sheath filaments can be used for printing a pressure-sensitive adhesive using fused filament fabrication (FFF). The material properties needed for FFF dispensing typically are significantly different than those required for hot-melt dispensing of a pressure-sensitive adhesive composition. For instance, in the case of traditional hot-melt adhesive dispensing, the adhesive is melted into a liquid inside a tank and pumped out through a hose and nozzle. Thus, traditional hot-melt adhesive dispensing requires a low-melt viscosity adhesive, which is often quantified as a high melt flow index ("MFI") adhesive. If the viscosity is too high (or the MFI is too low), the hot-melt adhesive cannot be effectively transported from the tank to the nozzle. In contrast, FFF involves melting a filament only within a nozzle at the point of dispensing, and therefore is not limited to low melt viscosity adhesives (high melt flow index adhesives) that can be easily pumped. In fact, a high melt viscosity adhesive (a low melt flow index adhesive) can advantageously provide geometric stability to a pressure-sensitive adhesive after dispensing, which allows for precise and controlled placement of the adhesive. The adhesive does not spread excessively after being printed.

In addition, FFF typically requires a suitable filament to have at least a certain minimum tensile strength so that large spools of filament can be continuously fed to a nozzle without breaking. The FFF filaments are usually spooled into level wound rolls. If a core-sheath filament is spooled into level wound rolls, the material nearest the core can be subjected to high compressive forces. Preferably, the core-sheath filament is resistant to permanent cross-sectional deformation (i.e., compression set) and self-adhesion (i.e., blocking during storage).

Pressure-sensitive adhesives that include silicone-based block copolymers tend to be water resistant and are well suited for use in high humidity environments. Further, these pressure-sensitive adhesives can be formulated to be clear (or even optically clear) and can be used in various applications where that characteristic is beneficial.

### Definitions:

The terms "a", "an", and "the" are used interchangeably with "at least one" to mean one or more of the elements being described. The phrases "at least one of" and "comprises at least one of" followed by a list refers to any one of the items in the list and any combination of two or more items in the list.

The term "and/or" means either or both. For example, the expression X and/or Y means X, Y, or a combination thereof (both X and Y).

The term "alkenyl" refers to a monovalent group that is a radical of an alkene, which is a hydrocarbon with at least one carbon-carbon double bond. The alkenyl can be linear, branched, cyclic, or combinations thereof and typically contains 2 to 20 carbon atoms. In some embodiments, the alkenyl contains 2 to 18, 2 to 12, 2 to 10, 4 to 10, 4 to 8, 2 to 8, 2 to 6, or 2 to 4 carbon atoms. Exemplary alkenyl groups include ethenyl, 1-propenyl, and 1-butenyl.

The term "alkyl" refers to a monovalent group that is a radical of an alkane, which is a saturated hydrocarbon. The alkyl can be linear, branched, cyclic, or combinations thereof and typically has 1 to 20 carbon atoms. In some embodiments, the alkyl group contains 1 to 18, 1 to 12, 1 to 10, 1 to 6, or 1 to 4 carbon atoms. Examples of alkyl groups include, but are not limited to, methyl, ethyl, n-propyl, isopropyl, n-butyl, isobutyl, *tert*-butyl, n-pentyl, n-hexyl, cyclohexyl, n-heptyl, n-octyl, ethylhexyl, cyclopentyl, cyclohexyl, cycloheptyl, adamantyl, norbornyl, octadecyl, and the like.

The term "alkylene" refers to a divalent group that is a radical of an alkane. The alkylene can be straight-chained, branched, cyclic, or combinations thereof. The alkylene typically has 1 to 20 carbon atoms. In some embodiments, the alkylene contains 1 to 18, 1 to 12, 1 to 10, 1 to 8, 1 to 6, or 1 to 4 carbon atoms. The radical centers of the alkylene can be on the same carbon atom (i.e., an alkylidene) or on different carbon atoms. Examples of alkylene include, but are not limited to, methylene, ethylene, n-propylene, isopropylene, n-butylene, isobutylene, *tert*-butylene, n-pentylene, n-hexylene, cyclohexylene, n-heptylene, n-octylene, ethylhexylene, cyclopentylene, cycloheptylene, adamantylene, norbomylene, octadecylene, and the like.

The term "alkoxy" refers to a monovalent group of formula -OR where R is an alkyl group.

The term "alkoxycarbonyl" refers to a monovalent group of formula -(CO)OR where (CO) denotes a carbonyl group and R is an alkyl group.

The term "aralkyl" refers to a monovalent group of formula -R-Ar where R is an alkyl and Ar is an aryl group. That is, the aralkyl is an alkyl substituted with an aryl but can be viewed as an aryl bonded to an alkylene group. The term "substituted aralkyl" refers to an aralkyl substituted with one or more groups selected from halo, alkyl, haloalkyl, alkoxy, or alkoxycarbonyl. The aryl portion of the aralkyl is typically the group that is substituted.

The term "arylene-alkylene" refers to a divalent group of formula -R-$Ar^a$- where R is an alkylene and $Ar^a$ is an arylene (i.e., an alkylene is bonded to an arylene). The term "substituted arylene-alkylene" refers to an arylene-alkylene substituted with one or more groups selected from halo, alkyl, haloalkyl, alkoxy, or alkoxycarbonyl. The arylene portion of the arylene-alkylene is typically the group that is substituted.

The term "aryl" refers to a monovalent group that is radical of an arene, which is a carbocyclic, aromatic compound. The aryl can have one to five rings that are connected to or fused to the aromatic ring. The other ring structures can be aromatic, non-aromatic, or combinations thereof. Examples of aryl groups include, but are not limited to, phenyl, biphenyl, terphenyl, naphthyl, acenaphthyl, anthraquinonyl, phenanthryl, anthracenyl, pyrenyl, perylenyl, and fluorenyl. The term "substituted aryl" refers to an aryl substituted with one or more groups selected from halo, alkyl, haloalkyl, alkoxy, or alkoxycarbonyl.

The term "arylene" refers to a divalent group that is aromatic and carbocyclic. The arylene can have one to five rings that are connected to or fused to the aromatic ring. The other ring structures can be aromatic, non-aromatic, or combinations thereof. Examples of arylene groups include, but are not limited to, phenylene, biphenylene, terphenylene, naphthylene, acenaphthylene, anthraquinonylene, phenanthrylene, anthracenylene, pyrenylene, perylenylene, and fluorenylene. The term "substituted arylene" refers to an aryl substituted with one or more groups selected from halo, alkyl, haloalkyl, alkoxy, or alkoxycarbonyl.

The term "aryloxy" refers to a monovalent group of formula -OAr where Ar is an aryl group.

The term "carbonyl" refers to a divalent group of formula -(CO)- where the carbon atom is attached to the oxygen atom with a double bond.

The term "carbonylamino" refers to a divalent group of formula -(CO)-$NR^a$- where $R^a$ is hydrogen, alkyl, aryl, aralkyl, or part of a heterocyclic group.

The term "halo" refers to fluoro, chloro, bromo, or iodo.

The term "haloalkyl" refers to an alkyl having at least one hydrogen atom replaced with a halo. Some haloalkyl groups are fluoroalkyl groups, chloroalkyl groups, or bromoalkyl groups.

The term "oxalyl" refers to a divalent group of formula -(CO)-(CO)- where each (CO) denotes a carbonyl group.

The term "oxalylamino" refers to a divalent group of formula -(CO)-(CO)-$NR^a$- where each (CO) denotes a carbonyl group and where $R^a$ is hydrogen, alkyl, aryl, alkaryl, aralkyl, or part of a heterocyclic group that includes the nitrogen atom to which $R^a$ is attached.

The term "primary amino" refers to a monovalent group $-NH_2$.

The term "secondary amino" refers to a monovalent group -$NHR^b$ where $R^b$ is an alkyl, aryl, aralkyl, or part of a heterocyclic group that includes the nitrogen atom to which $R^b$ is attached.

The term "heteroalkylene" refers to a divalent group that includes at least two alkylene groups connected by a thio, oxy, or -$NR^a$- where $R^a$ is hydrogen, alkyl, aryl, alkaryl, or aralkyl. The heteroalkylene can be linear, branched, cyclic, or combinations thereof and can include up to 60 carbon atoms and up to 15 heteroatoms. In some embodiments, the heteroalkylene includes up to 50 carbon atoms, up to 40 carbon atoms, up to 30 carbon atoms, up to 20 carbon

atoms, or up to 10 carbon atoms. Some heteroalkylene groups are polyalkylene oxide groups where the heteroatoms are oxygen.

The terms "polymer" and "polymeric material" are used interchangeably and refer to materials prepared from one or more reactants (i.e., monomers). Likewise, the term "polymerize" refers to the process of making a polymeric material from one or more reactants. The terms "copolymer" and "copolymeric material" are used interchangeably and refer to polymeric material prepared from at least two different reactants.

The term "thermoplastic" refers to a polymeric material that flows when heated sufficiently above its glass transition temperature and become solid when cooled.

As used herein, the terms "glass transition temperature" and "$T_g$" are used interchangeably and refer to the glass transition temperature of a material or a mixture. Unless otherwise indicated, glass transition temperature values are determined by Differential Scanning Calorimetry ("DSC").

The words "preferred" and "preferably" refer to embodiments of the disclosure that may afford certain benefits, under certain circumstances. However, other embodiments may also be preferred, under the same or other circumstances. Furthermore, the recitation of one or more preferred embodiments does not imply that other embodiments are not useful and is not intended to exclude other embodiments from the scope of the disclosure.

As used herein, the term "pressure-sensitive adhesive" or "PSA" refers to a viscoelastic material that possesses the following properties: (1) aggressive and permanent tack, (2) adherence with no more than finger pressure, (3) sufficient ability to hold onto an adherend, and (4) sufficient cohesive strength to be removed cleanly from the adherend. Materials that have been found to function well as PSAs include polymers designed and formulated to exhibit the requisite viscoelastic properties resulting in a desired balance of tack, peel adhesion, and shear holding power. PSAs are characterized by being normally tacky at room temperature. Materials that are merely sticky or adhere to a surface do not constitute a PSA; the term PSA encompasses materials with additional viscoelastic properties. PSAs are adhesives that satisfy the Dahlquist criteria for tackiness, which means that the shear storage modulus is typically $3 \times 10^5$ Pa (300 kPa) or less when measured at 25°C and 1 Hertz (6.28 radians/second). PSAs typically exhibit adhesion, cohesion, compliance, and elasticity at room temperature.

As used herein, "core-sheath filament" refers to a composition in which a first material (i.e., the core) is surrounded by a second material (i.e., the sheath) and the core and sheath have a common longitudinal axis. While the core and the sheath are typically concentric, the cross-sectional shape of the core can be any desired cross-sectional shape such as a circle, oval, square, rectangle, triangle, or the like. The ends of the core do not need to be surrounded by the sheath.

The terms "core-sheath filament" and "filament" are used interchangeably. That is, the term "filament" includes both the core and the sheath.

The sheath surrounds the core in the core-sheath filament. In this context, "surround" (or similar words such as "surrounding") means that the sheath composition covers the entire perimeter (i.e., the cross-sectional perimeter) of the core for a major portion (e.g., at least 80 percent or more, at least 85 percent or more, at least 90 percent or more, or at least 95 percent or more) of the length (the long axis direction) of the filament. Surrounding is typically meant to imply that all but perhaps the very ends of the filament have the core covered completely by the sheath.

As used herein, the term "non-tacky" refers to a material that passes a "Self-Adhesion Test", in which the force required to peel the material apart from itself is at or less than a predetermined maximum threshold amount, without fracturing the material. The Self-Adhesion Test is described below and is typically performed on a sample of the sheath material to determine whether the sheath is non-tacky.

As used herein, "melt flow index" or "MFI" refers to the amount of polymer that can be pushed through a die at a specified temperature using a specified weight. Melt flow index can be determined using ASTM D1238-13 at 190°C and with a load (weight) of 2.16 kg. Some of the reported values for the melt flow index are available from vendors of the sheath material and others were measure by the applicants using Procedure A of the ASTM method. The vendor data was reported as having been determined using the same ASTM method as well as the same temperature and load.

The term "substantially", unless otherwise specifically defined, means to a high degree of approximation (e.g., within +/- 10% for quantifiable properties) but again without requiring absolute precision or a perfect match. Terms such as same, equal, uniform, constant, strictly, and the like, are understood to be within the usual tolerances or measuring error applicable to the specific circumstance rather than requiring absolute precision or a perfect match.

As used herein, any statement of a range includes the endpoint of the range and all suitable values within the range (e.g., 1 to 5 includes 1, 1.5, 2, 2.75, 3, 3.80, 4, 5, etc.).

## Core-sheath filaments

An example core-sheath filament 10 is shown schematically in FIG. 1. The filament includes a core 12 and a sheath 14 surrounding (encasing) the outer surface 16 of the core 12. FIG. 2 shows the core-sheath filament 20 in a cross-sectional view. The core 22 is surrounded by the sheath 24. Any desired cross-sectional shape can be used for

the core. For example, the cross-sectional shape can be a circle, oval, square, rectangular, triangular, or the like. The cross-sectional area of the core 22 is typically larger than the cross-sectional area of the sheath 24. In addition to shape and area, the cross-section of the filament also includes cross-sectional distances. Cross-sectional distances are equivalent to the lengths of chords that could join points on the perimeter of the cross-section. The term "longest cross-sectional distance" refers to the greatest length of a chord that can be drawn through the cross-section of a filament, at a given location along its axis.

The core-sheath filament usually has a relatively small longest cross-sectional distance (e.g., the longest cross-sectional distance corresponds to the diameter for filaments that have a circular cross-sectional shape) so that it can be used in applications where precise deposition of a pressure-sensitive adhesive is needed or is advantageous. For instance, the core-sheath filament usually has a longest cross-sectional distance in a range of 1 to 20 millimeters (mm). The longest cross-sectional distance of the filament can be at least 1 mm, at least 2 mm, at least 3 mm, at least 4 mm, at least 5 mm, at least 6 mm, at least 8 mm, or at least 10 mm and can be up to 20 mm, up to 18 mm, up to 15 mm, up to 12 mm, up to 10 mm, up to 8 mm, up to 6 mm, or up to 5 mm. This average distance can be, for example, in a range of 2 to 20 mm, 5 to 15 mm, or 8 to 12 mm.

Often, 1 to 10 percent of the longest cross-sectional distance (e.g., diameter) of the core-sheath filament is contributed by the sheath and 90 to 99 percent of the longest cross-sectional distance (e.g., diameter) of the core-sheath filament is contributed by the core. For example, up to 10 percent, up to 9 percent, up to 8 percent, up to 7 percent, up to 6 percent, up to 5 percent, up to 4 percent, up to 3 percent, or up to 2 percent and at least 1 percent, at least 2 percent, or at least 3 percent of the longest cross-sectional distance of the filament can be contributed by the sheath with the remainder being contributed by the core. The sheath extends completely around the perimeter (e.g., circumference, in the case of a circular cross-section) of the core to prevent the core from sticking to itself. In some embodiments, however, the ends of the filament may contain only the core.

Often, the core-sheath filament has an aspect ratio of length to longest cross-sectional distance (e.g., diameter) of 50:1 or greater, 100: 1 or greater, or 250:1 or greater. Core-sheath filaments having a length of at least about 20 feet (6 meters) can be especially useful for printing a pressure-sensitive adhesive. Depending on the application or use of the core-sheath filament, having a relatively consistent longest cross-sectional distance (e.g., diameter) over its length can be desirable. For instance, an operator might calculate the amount of material being melted and dispensed based on the expected mass of filament per predetermined length; but if the mass per length varies widely, the amount of material dispensed may not match the calculated amount. In some embodiments, the core-sheath filament has a maximum variation of longest cross-sectional distance (e.g., diameter) of 20 percent over a length of 50 centimeters (cm), or even a maximum variation in longest cross-sectional distance (e.g., diameter) of 15 percent over a length of 50 cm.

Core-sheath filaments described herein can exhibit a variety of desirable properties, both as prepared and as a pressure-sensitive adhesive composition. As formed, a core-sheath filament desirably has strength consistent with being handled without fracturing or tearing of the sheath. The structural integrity needed for the core-sheath filament varies according to the specific application of use. Preferably, a core-sheath filament has strength consistent with the requirements and parameters of one or more additive manufacturing devices (e.g., 3D printing systems). One additive manufacturing apparatus, however, could subject the core-sheath filament to a greater force when feeding the filament to a deposition nozzle than a different apparatus. As formed, the core-sheath filament desirably also has modulus and yield stress consistent with being handled without excessive or unintentional stretching.

Advantageously, the elongation at break of the sheath material of the core-sheath filament is typically 50 percent or greater, 60 percent or greater, 80 percent or greater, 100 percent or greater, 250 percent or greater, 400 percent or greater, 750 percent or greater, 1000 percent or greater, 1400 percent or greater, or 1750 percent or greater and 2000 percent or less, 1500 percent or less, 900 percent or less, 500 percent or less, or 200 percent or less. Stated another way, the elongation at break of the sheath material of the core-sheath filament can range from 50 percent to 2000 percent. In some embodiments, the elongation at break is at least 60 percent, at least 80 percent, or at least 100 percent. Elongation at break can be measured, for example, by the methods outlined in ASTM D638-14, using test specimen Type IV.

Advantages provided by at least certain embodiments of employing the core-sheath filament as a pressure-sensitive adhesive once it is melted and mixed include one or more of: low volatile organic compound ("VOC") characteristics, avoiding die cutting, design flexibility, achieving intricate non-planar bonding patterns, printing on thin and/or delicate substrates, and printing on an irregular and/or complex topography.

Any suitable method can be used to prepare the core-sheath filaments. Most methods include forming a core composition that is a pressure-sensitive adhesive. The pressure-sensitive adhesive in the core contains 1) 45 to 80 weight percent of a silicone-containing block copolymer and 2) 20 to 55 weight percent of a silicone tackifying resin based on a total weight of the core. The silicone-containing block copolymer includes a first block containing a polydiorganosiloxane and a second block that is free of a silicone. These methods further include forming a sheath composition comprising a non-tacky thermoplastic material that is free of a silicone. These methods still further include wrapping the sheath composition around the core composition such that the core-sheath filament has a longest cross-sectional distance

in a range of 1 to 20 millimeters and wherein the core-sheath filament contains 90 to 99 weight percent of the core and 1 to 10 weight percent of the sheath.

In many embodiments, the method of making the core-sheath filament includes co-extruding the core composition and the sheath composition though a coaxial die such that the sheath composition surrounds the core composition. Optional additives for the core composition, which is a pressure-sensitive adhesive composition, can be added in an extruder (e.g., a twin-screw extruder) equipped with a side stuffer that allows for the inclusion of additives. Similarly, optional additives can be added to a sheath composition in the extruder. The pressure-sensitive adhesive core can be extruded through the center portion of a coaxial die having an appropriate diameter while the non-tacky sheath can be extruded through the outer portion of the coaxial die. One suitable die is a filament spinning die as described in U.S. Patent No. 7,773,834 (Ouderkirk et al.). Optionally, the filament can be cooled upon extrusion using a water bath. The filament can be lengthened using a belt puller. The speed of the belt puller can be adjusted to achieve a desired filament diameter.

In other embodiments, the core can be formed by extrusion of the core composition. The resulting core can be rolled within a sheath composition having a size sufficient to surround the core. In still other embodiments, the core composition can be formed as a sheet. A stack of the sheets can be formed having a thickness suitable for the filament. A sheath composition can be positioned around the stack such that the sheath composition surrounds the stack.

Without wishing to be bound by theory, it is believed that the overall final adhesive material property of a dispensed core-sheath filament will demonstrate viscoelasticity (i.e., stress relaxation over time). On the other hand, a desirable property of the sheath material is its ability to hold energy under a static load, showing minimal stress dissipation over time. A low MFI and a high tensile strength help prevent the core-sheath filament from breaking when subjected to high inertial forces, such as when the core-sheath is starting to be unspooled.

Suitable components of the core-sheath filament are described in detail below.

Core

The core of the core-sheath filament is a pressure-sensitive adhesive. The pressure-sensitive adhesive contains 45 to 80 weight percent of a silicone block copolymer and 20 to 55 weight percent of a silicone tackifying resin based on a total weight of the core. The silicone block copolymer contains a first block comprising a polydiorganosiloxane and a second block that is free of a silicone. The first block often provides a "soft" segment and the second block typically provides a "hard" segment. In many embodiments, the silicone block copolymer is a polydiorganosiloxane polyoxamide, polydiorganosiloxane polyurea, polydiorganosiloxane polyurethane, or a polydiorganosiloxane polyamide. For some core-shell filaments, silicone block copolymers selected from a polydiorganosiloxane polyoxamide are preferred.

The silicone block copolymers all have a first block that is a polydiorganosiloxane. As used herein, a polydiorganosiloxane refers to a group of Formula (I).

$$*\text{-}R^2\text{-}Si(R^1)_2\text{-}[O\text{-}Si(R^1)_2]_n\text{-}O\text{-}Si(R^1)_2\text{-}R^2\text{-}* \qquad (I)$$

In Formula (I), Each $R^1$ is independently an alkyl, haloalkyl, aralkyl, substituted aralkyl, aryl, substituted aryl, or alkenyl. Each $R^2$ is independently an alkylene, alkylene-arylene, or a combination thereof. The variable n is an integer that is equal to at least 1 such as in a range of 1 to 1500. The asterisk (*) indicates where the group of Formula (I) is bounded to another group in the polymer.

Each $R^1$ is independently an alkyl, haloalkyl, alkenyl, aryl, substituted aryl, aralkyl, or substituted aralkyl. Suitable alkyl groups for $R^1$ in Formula (I) typically have 1 to 10, 1 to 6, or 1 to 4 carbon atoms. Exemplary alkyl groups include, but are not limited to, methyl, ethyl, isopropyl, n-propyl, n-butyl, and iso-butyl. Suitable haloalkyl groups for $R^1$ often have only a portion of the hydrogen atoms of the corresponding alkyl group replaced with a halogen. Exemplary haloalkyl groups include chloroalkyl and fluoroalkyl groups with 1 to 3 halo atoms and 3 to 10 carbon atoms. Suitable alkenyl groups for $R^1$ often have 2 to 10 carbon atoms. Exemplary alkenyl groups often have 2 to 8, 2 to 6, or 2 to 4 carbon atoms such as ethenyl, 1-propenyl, and 1-butenyl. Suitable aryl groups for $R^6$ often have 6 to 12 carbon atoms. Phenyl is an exemplary aryl group. The aryl group can be unsubstituted or substituted with an alkyl (e.g., an alkyl having 1 to 10 carbon atoms, 1 to 6 carbon atoms, or 1 to 4 carbon atoms), a haloalkyl (e.g., a haloalkyl having 1 to 10 carbon atoms, 1 to 6 carbon atoms, or 1 to 4 carbon atoms), an alkoxy (e.g., an alkoxy having 1 to 10 carbon atoms, 1 to 6 carbon atoms, or 1 to 4 carbon atoms), a alkoxycarbonyl (e.g., a alkoxycarbonyl having 1 to 10 carbon atoms, 1 to 6 carbon atoms, or 1 to 4 carbon atoms), or halo (e.g., chloro, bromo, or fluoro). Suitable aralkyl groups for $R^1$ usually have an alkylene group having 1 to 10 carbon atoms and an aryl group having 6 to 12 carbon atoms. In some exemplary aralkyl groups, the aryl group is phenyl and the alkylene group has 1 to 10 carbon atoms, 1 to 6 carbon atoms, or 1 to 4 carbon atoms (i.e., the structure of the aralkyl is alkylene-phenyl where an alkylene is bonded to a phenyl group). The aryl group of the aralkyl can be unsubstituted or substituted with an alkyl (e.g., an alkyl having 1 to 10 carbon atoms, 1 to 6 carbon atoms, or 1 to 4 carbon atoms), a haloalkyl (e.g., a haloalkyl having 1 to 10 carbon atoms, 1 to 6 carbon

atoms, or 1 to 4 carbon atoms), an alkoxy (e.g., an alkoxy having 1 to 10 carbon atoms, 1 to 6 carbon atoms, or 1 to 4 carbon atoms), a alkoxycarbonyl (e.g., a alkoxycarbonyl having 1 to 10 carbon atoms, 1 to 6 carbon atoms, or 1 to 4 carbon atoms), or halo (e.g., chloro, bromo, or fluoro).

In many embodiments of Formula (I), at least 50 percent of the $R^1$ groups are methyl. For example, at least 60 percent, at least 70 percent, at least 80 percent, at least 90 percent, at least 95 percent, at least 98 percent, at least 99 percent of the $R^1$ groups can be methyl. The remaining $R^6$ groups can be an alkyl having at least two carbon atoms, haloalkyl, aralkyl, substituted aralkyl, alkenyl, aryl, or substituted aryl. In other examples, all the $R^1$ groups are methyl.

Each group $R^2$ in Formula (I) is independently an alkylene, arylene-alkylene, or a combination thereof. Suitable alkylene groups typically have up to 10 carbon atoms, up to 8 carbon atoms, up to 6 carbon atoms, or up to 4 carbon atoms. Exemplary alkylene groups include methylene, ethylene, propylene, butylene, and the like. Suitable arylene-alkylene groups usually have an arylene group having 6 to 12 carbon atoms bonded to an alkylene group having 1 to 10 carbon atoms. In some exemplary arylene-alkylene groups, the arylene portion is phenylene. That is, the divalent arylene-alkylene group is phenylene-alkylene where the phenylene is bonded to an alkylene having 1 to 10, 1 to 8, 1 to 6, or 1 to 4 carbon atoms. As used herein with reference to group $R^2$, "a combination thereof' refers to a combination of two or more groups selected from an alkylene and arylene-alkylene group. A combination can be, for example, a single arylene-alkylene bonded to a single alkylene (e.g., alkylene-arylene-alkylene). In one exemplary alkylene-arylene-alkylene combination, the arylene is phenylene and each alkylene has 1 to 10, 1 to 6, or 1 to 4 carbon atoms.

In many embodiments, $R^2$ is an alkylene having 1 to 10 carbon atoms, 2 to 6 carbon atoms, 1 to 4 carbon atoms, or 2 to 4 carbon atoms. In some embodiments, $R^2$ is propylene.

Each subscript n in Formula (I) is an integer in a range of 1 to 1500. The variable n is typically an integer greater than 10, greater than 20, greater than 30, greater than 40. The variable n is often an integer up to 3000, up to 2000, up to 1500, up to 1000, or up to 500. For example, variable n can be in the range of 40 to 1000, 40 to 500, 50 to 500, 50 to 400, 50 to 300, 50 to 200, 50 to100, 50 to 80, or 50 to 60.

In many embodiments, the silicone block copolymer that is in the pressure-sensitive adhesive of the core has at least two repeating units of Formula (II).

$$*\text{-NR}^4\text{-Q}^2\text{-NR}^4\text{-(CO)-(CO)-NR}^3\text{-Q}^1\text{-NR}^3\text{-(CO)-(CO)-}* \qquad \text{(II)}$$

In Formula (II), group $Q^1$ is a polydiorganosiloxane. That is, $Q^1$ is the divalent group $-R^2-Si(R^1)_2-[O-Si(R^1)_2]_n-O-Si(R^1)_2-R^2-$ where $R^1$, $R^2$, and the variable n are described above for Formula (I). Group $R^3$ in Formula (II) is hydrogen, alkyl, aralkyl, or aryl. Group $R^4$ is hydrogen, alkyl, or part of a ring structure with group $Q^2$. Group $Q^2$ is the residue of a diamine of formula $R^4HN-Q^2-NHR^4$ minus the two amino groups $-NHR^4$. An asterisk (*) indicates a bonding site to another group in the block copolymer. The silicone block copolymer having at least two repeat units of Formula (II) is a polydiorganosiloxane polyoxamide.

In Formula (II), each group $R^3$ in Formula (II) can be independently hydrogen, alkyl, aralkyl, or aryl. Suitable alkyl groups can be linear or branched and typically contain 1 to 10 carbon atoms, 1 to 8 carbon atoms, 1 to 6 carbon atoms, or 1 to 4 carbon atoms. Suitable aryl groups typically include those having 6 to 12 carbon atoms. The aryl group is often phenyl. Suitable aralkyl groups include those having an alkyl group with 1 to 10 carbon atoms substituted with an aryl group having 6 to 12 carbon atoms. Exemplary aralkyl groups often include an alkyl having 1 to 10 carbon atoms or 1 to 4 carbon atoms bonded to a phenyl. Each group $R^3$ is often hydrogen.

Each $R^4$ group in Formula (II) independently can be hydrogen, alkyl, aralkyl, aryl, or part of a heterocyclic group that includes $Q^2$ and the nitrogen to which $R^4$ is attached. Suitable alkyl groups can be linear or branched and typically contain 1 to 10 carbon atoms, 1 to 8 carbon atoms, 1 to 6 carbon atoms, or 1 to 4 carbon atoms. Suitable aryl groups typically include those having 6 to 12 carbon atoms. The aryl group is often phenyl. Suitable aralkyl groups include those having an alkyl group with 1 to 10 carbon atoms substituted with an aryl group having 6 to 12 carbon atoms. Exemplary aralkyl groups often include an alkyl having 1 to 10 carbon atoms or 1 to 4 carbon atoms substituted with a phenyl. When $R^4$ is part of a heterocyclic group that includes $Q^2$ and the nitrogen to which $R^4$ is attached, the heterocyclic group typically is saturated or partially saturated and contains at least 4, at least 5, or at least 6 ring members. Each group $R^4$ is often hydrogen.

Group $Q^2$ in Formula (II) is the residue of a diamine of formula $R^4HN-Q^2-NHR^4$ minus the two amino groups $-NHR^4$. In many embodiments, $Q^2$ is (a) an alkylene, (b) arylene, (c) a carbonylamino group linking a first group to a second group, wherein the first group and the second group are each independently an alkylene, arylene, or a combination thereof, (d) part of a heterocyclic group that includes $R^4$ and the nitrogen to which $R^4$ is attached, or (e) a combination thereof. Any suitable alkylene can be used for $Q^2$. Exemplary alkylene groups often have at least 2 carbon atoms, at least 4 carbon atoms, at least 6 carbon atoms, at least 10 carbon atoms, or at least 20 carbon atoms. Any suitable arylene can be used for $Q^2$. Exemplary arylenes often have 6 to 12 carbon atoms and include, but are not limited to, phenylene and biphenylene.

The group $Q^2$ can be a combination of one or more alkylene groups with one or more arylene groups. An

arylene-alkylene (i.e., a group having an alkylene bonded to an arylene) is a combination of one alkylene and one arylene. Other combinations can include, for example, an arylene and two alkylene groups such as the -alkylene-arylene-alkylene- group. In some examples, this group can be of formula $-C_xH_{2x}-C_6H_4-C_xH_{2x}-$ where x is an integer in the range of 1 to 10. One example is the group $-CH_2-C_6H_4-CH_2-$.

When group $Q^2$ includes a carbonylamino group, this group can be of formula $-Q^a-(CO)NR^4-Q^a-$ where each $Q^a$ is independently an alkylene, arylene, or combination thereof. Multiple such groups can be linked such as, for example, $-Q^a-(CO)NR^4-Q^a-(CO)NR^4-Q^a-$ and $-Q^a-(CO)NR^4-Q^a-(CO)NR^4-Q^a-(CO)NR^4-Q^a-$.

Some $Q^2$ groups combine with both the adjacent $R^4$ groups and the nitrogen atom to which they are both attached to form a heterocylic group. The heterocylic group often has at least 4, at least 5, or at least 6 ring atoms. The heterocylic group can be unsaturated or partially saturated. One or both nitrogen atoms attached to $Q^2$ can be part of the heterocyclic group. One exemplary heterocyclic group is the divalent group

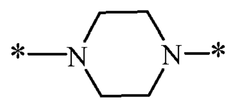

derived from piperazine.

The polydiorganosiloxane polyoxamide having at least two repeating units of Formula (II) can be prepared in any desired manner. In many embodiments, these silicone block copolymers are prepared as described, for examples, in U.S. Patent No. 7,501,184 (Leir et al.) or in U.S. Patent No. 8,765,881 (Hays et al).

In many embodiments, the polydiorganosiloxane polyoxamides are formed as shown in Reaction Scheme A where an oxalate of Formula (VI) is reacted with an organic diamine of Formula (VII) to provide an intermediate of Formula (VIII).

**Reaction Scheme A**

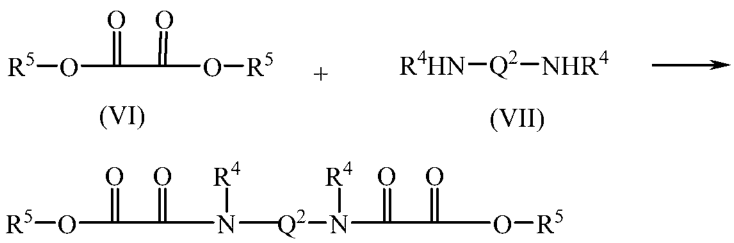

(VI) (VII) (VIII)

The oxalate compound of Formula (VI) can be prepared, for example, by reacting a compound of formula $R^5$-OH with oxalyl dichloride. Group $R^5$ is typically an alkyl, haloalkyl, aralkyl, substituted aralkyl, alkenyl, aryl, substituted aryl. Oxalates of Formula (VI) are commercially available (e.g., from Sigma-Aldrich, Milwaukee, WI, USA and from VWR International, Bristol, CT, USA) and include, but are not limited to, dimethyl oxalate, diethyl oxalate, di-n-butyl oxalate, di-tert-butyl oxalate, and bis(phenyl) oxalate.

The organic diamines of Formula (VIII) can have two primary amino groups, two secondary amino groups, or a primary amino group plus a secondary amino group. In many embodiments, the organic diamines have two primary amino groups. Some exemplary organic diamines of Formula (VII) are alkylene diamines (i.e., $Q^2$ is a alkylene) such as ethylene diamine, propylene diamine, butylene diamine, hexamethylene diamine, 2-methylpentamethylene 1,5-diamine (i.e., commercially available from DuPont, Wilmington, DE under the trade designation DYTEK A), 1,3-pentane diamine (commercially available from DuPont under the trade designation DYTEK EP), 1,4-cyclohexane diamine, 1,2-cyclohexane diamine (commercially available from DuPont under the trade designation DHC-99), 4,4'-bis(aminocyclohexyl)methane, and 3-aminomethyl-3,5,5-trimethylcyclohexylamine.

Still other exemplary organic diamines of Formula (VII) are arylene diamines (i.e., $Q^2$ is an arylene such as phenylene) such as m-phenylene diamine, o-phenylene diamine, and p-phenylene diamine. Exemplary aralkylene diamines (i.e., is an alkylene-arylene group) include, but are not limited to 4-aminomethyl-phenylamine, 3-aminomethyl-phenylamine, and 2-aminomethyl-phenylamine. Exemplary alkylene-aralkylene (i.e., is a alkylene-arylene-alkylene group) diamines include, but are not limited to, 4-aminomethyl-benzylamine (i.e., *para*-xylene diamine), 3-aminomethyl-benzylamine (i.e., *meta*-xylene diamine), and 2-aminomethyl-benzylamine (i.e., *ortho*-xylene diamine).

Yet other exemplary diamines have one or more secondary amino groups that are part of a heterocylic group.

Examples include, but are not limited to, piperizine.

To form the polydiorganosiloxane polyoxamide, the compound of Formula (VIII) is typically reacted with a polydiorganosiloxane diamine of Formula (IX).

$$H_2N\text{-}Q^1\text{-}NH_2 \qquad (IX)$$

In Formula (IX), $Q^1$ is a polydiorganosiloxane as defined in Formula (I). The polydiorganosiloxane diamine of Formula (IX) can be prepared by any known method and can have any suitable molecular weight, such as an average molecular weight in the range of 700 to 150,000 Daltons (grams/mole). For example, the average molecular weight can be at least 700 g/mole, at least 1000 Daltons, at least 2000 Daltons, at least 5000 Daltons, or at least 10,000 Daltons and up to 150,000 Daltons, up to 100,000 Daltons, up to 50,000 Daltons, or up to 20,000 Daltons. In some embodiments, the weight average molecular weight is in a range of 1000 to 100,000 Daltons, 5000 to 50,000 Daltons, or 10,000 to 50,000 gram/mole.

Suitable polydiorganosiloxane diamines of Formula (IX) and methods of making the polydiorganosiloxane diamines are described, for example, in U.S. Patent Nos. 3,890,269 (Martin), 4,661,577 (Jo Lane et al.), 5,026,890 (Webb et al.), 5,276,122 (Aoki et al.), 5,214,119 (Leir et al.), 5,461,134 (Leir et al.), 5,512,650 (Leir et al.), and 6,355,759 (Sherman et al.). A polydiorganosiloxane diamine having a molecular weight greater than 2,000 g/mole or greater than 5,000 g/mole can be prepared using the methods described in U.S. Patent Nos. 5,214,119 (Leir et al.), 5,461,134 (Leir et al.), and 5,512,650 (Leir et al.). Some polydiorganosiloxane diamines are commercially available, for example, from Shin Etsu Silicones of America, Inc. (Torrance, CA), from Wacker Silicones (Adrian, MI), and from Gelest Inc. (Morrisville, PA).

In other embodiments, the silicone block copolymer that is in the pressure-sensitive adhesive of the core is a polydiorganosiloxane polyurea having at least two repeat units of Formula (III).

$$*\text{-NH-}Q^3\text{-NH-(CO)-}NR^3\text{-}Q^1\text{-}NR^3\text{-(CO)-}* \qquad (III)$$

In Formula (III), $Q^1$ is a polydiorganosiloxane of formula $-R^2\text{-Si}(R^1)_2\text{-[O-Si}(R^1)_2]_n\text{-O-Si}(R^1)_2\text{-}R^2\text{-}$. Each $R^1$ is independently an alkyl, haloalkyl, aralkyl, substituted aralkyl, aryl, substituted aryl, or alkenyl. Each $R^2$ is independently an alkylene, arylene-alkylene, or a combination thereof. Each $R^3$ is independently hydrogen, alkyl, aralkyl, or aryl. $Q^3$ is the residue of a diisocyanate of formula OCN-$Q^3$-NCO minus two isocyanato groups (-NCO). The variable n is an integer in a range of 1 to 1500 and an asterisk (*) indicates a bonding site to another group in the block copolymer.

The groups $Q^1$, $R^1$, $R^2$, and $R^3$ plus the variable n in Formula (III) are the same as described above for the polydiorganosiloxane groups of Formula (I).

In many embodiments, the polydiorganosiloxane polyurea is formed by reaction of a polydiorganosiloxane diamine, as show in of Formula (IX) above, with a diisocyanate compound of formula OCN-$Q^3$-NCO. Group $Q^3$ is the residue of a diisocyanate compound of formula OCN-$Q^3$-NCO minus the two isocyanato groups (-NCO). In many embodiments, group $Q^3$ is an alkylene, arylene, or a combination thereof (e.g., an alkylene-arylene or alkylene-arylene-alkylene group). Suitable alkylene groups can be linear branch, cyclic, or combinations thereof and can have 1 to 20 carbon atoms. Suitable arylene group can have 6 to 20 carbon atoms and can be unsubstituted or substituted with an alkyl (e.g., an alkyl having 1 to 10 carbon atoms, 1 to 6 carbon atoms, or 1 to 4 carbon atoms), an alkoxy (e.g., an alkoxy having 1 to 10 carbon atoms, 1 to 6 carbon atoms, or 1 to 4 carbon atoms), or halo (e.g., chloro, bromo, or fluoro).

Examples of diisocyanate compounds include, but are not limited to, include aromatic diisocyanates such as 2,6-toluene diisocyanate, 2,5-toluene diisocyanate, 2,4-toluene diisocyanate, m-phenylene diisocyanate, p-phenylene diisocyanate, methylenediphenylene-4,4'-diisocyanate, (4,4'-diisocyanato-3,3',5,5'-tetraethyl) diphenylmethane, 4,4-diisocyanato-3,3'-dimethoxybiphenyl (o-dianisidine diisocyanate), 5-chloro-2,4-toluene diisocyanate, 1-chloromethyl-2,4-diisocyanato benzene, m-xylylene diisocyanate and tetramethyl-m-xylylene diisocyanate; and aliphatic diisocyanates such as 1,4-diisocyanatobutane, 1,6-diisocyanatohexane, 1,12-diisocyanatododecane, and 2-methyl-1,5-diisocyanatopentane; and cycloaliphatic diisocyanates such as methylenedicyclohexylene-4,4'-diisocyanate, 3-isocyanatomethyl-3,5,5-trimethylcyclohexyl isocyanate (isophorone diisocyanate), and cyclohexylene-1,4-diisocyanate.

In addition to the polydiorganosiloxane diamine, the reaction mixture used to obtain the polydiorganosiloxane polyurea can further contain organic diamine compounds such as those of Formula (VII).

$$HR^4N\text{-}Q^2\text{-}NR^4H \qquad (VII)$$

Suitable diamines of Formula (VII) are the same as those described above for formation of polydiorganosiloxane polyoxamides. These additional organic diamines can function as chain extenders in the formation of the block copolymer.

The formation of polydiorganosiloxane polyurea block copolymers are described further, for example, in U.S. Patent Nos. 5,512,650 (Leir et al.), 5,214,119 (Leir et al.), 5,461,134 (Leir et al.), 6,407,195 (Sherman et al.), 6,441,118

(Sherman et al.), 6,846,893 (Sherman et al.), and 7,153,924 (Kuepfer et al.).

In still other embodiments, the silicone block copolymer that is in the pressure-sensitive adhesive of the core is a polydiorganosiloxane polyamide having at least two repeat units of Formula (IV).

$$*\text{-}Q^4\text{-(CO)-NR}^3\text{-}Q^1\text{-NR}^3\text{-(CO)-}* \qquad \text{(IV)}$$

In Formula (IV), $Q^1$ is a polydiorganosiloxane of formula $-R^2-Si(R^1)_2-[O-Si(R^1)_2]_n-O-Si(R^1)_2-R^2-$. Each $R^1$ is independently an alkyl, haloalkyl, aralkyl, substituted aralkyl, aryl, substituted aryl, or alkenyl. Each $R^2$ is independently an alkylene, arylene-alkylene, or a combination thereof. Each $R^3$ is independently hydrogen, alkyl, aralkyl, or aryl. $Q^4$ is the residue of a diacid chloride of formula Cl-(CO)-$Q^4$-(CO)-Cl minus the two -(CO)-Cl groups or diester of formula $R^7$O-(CO)-$Q^4$-(CO)-O$R^7$ minus two -(CO)-OR groups where $R^7$ is an alkyl. The variable n is an integer in a range of 1 to 1500. An asterisk (*) indicates a bonding site to another group in the block copolymer.

The groups $Q^1$, $R^1$, $R^2$, and $R^3$ plus the variable n are the same as described above for the polydiorganosiloxane groups of Formula (I).

In many embodiments, the polydiorganosiloxane polyamide is formed by reaction of a polydiorganosiloxane diamine, as show in of Formula (IX) above, with a diacid chloride of formula Cl-(CO)-$Q^4$-(CO)-Cl or a diester of formula $R^7$O-(CO)-$Q^4$-(CO)-O$R^7$ where $R^7$ is an alkyl. Group $Q^4$ is the residue of the diacid chloride minus two groups -(CO)-Cl or the residue of a diester minus two groups -(CO)-O$R^7$. In many embodiments, group $Q^4$ is an alkylene, arylene, or a combination thereof (e.g., an alkylene-arylene or alkylene-arylene-alkylene group). Suitable alkylene groups can be linear branch, cyclic, or combinations thereof and can have 1 to 20 carbon atoms. Suitable arylene group can have 6 to 20 carbon atoms and can be unsubstituted or substituted with an alkyl (e.g., an alkyl having 1 to 10 carbon atoms, 1 to 6 carbon atoms, or 1 to 4 carbon atoms), an alkoxy (e.g., an alkoxy having 1 to 10 carbon atoms, 1 to 6 carbon atoms, or 1 to 4 carbon atoms), or halo (e.g., chloro, bromo, or fluoro). Suitable examples of diacid chlorides include, but are not limited to, Succinyl chloride, malonyl chloride, glutaryl chloride, pimeloyl chloride, diethylmalonyl chloride, suberoyl chloride, adipoyl chloride, and sebacoyl chloride, isophthaloyl chloride, and terephthaloyl chloride. Suitable examples of diesters include, but are not limited to, dimethyl succinate, diethyl succinate, dimethyl glutarate, diethyl glutarate, dimethyl adipate, diethyl adipate, dimethyl suberate, diethyl suberate, dimethyl sebacate, diethyl sebacate, and dimethyl terephthalate.

In yet other embodiments, the silicone block copolymer that is in the pressure-sensitive adhesive of the core is a polydiorganosiloxane polyurethane. The polydiorganosiloxane polyurethane typically has at least two repeat units of Formula (V).

$$*\text{-NH-}Q^3\text{-NH-(CO)-O-}R^8\text{-X-(CO)-NR}^3\text{-}Q^1\text{-NR}^3\text{-(CO)-X-}R^8\text{-O-(CO)-}* \qquad \text{(V)}$$

In Formula (V), $Q^1$ is a polydiorganosiloxane of formula $-R^2-Si(R^1)_2-[O-Si(R^1)_2]_n-O-Si(R^1)_2-R^2-$. Each $R^1$ is independently an alkyl, haloalkyl, aralkyl, substituted aralkyl, aryl, substituted aryl, or alkenyl. Each $R^2$ is independently an alkylene, arylene-alkylene, or a combination thereof. Each $R^3$ is independently hydrogen, alkyl, aralkyl, or aryl. Groups $Q^3$ is the residue of a diisocyanate of formula OCN-$Q^3$-NCO minus two isocyanato groups (-NCO). Group X is methylene ($-CH_2-$) or oxy (-O-). Group $R^8$ is an alkylene. The variable n is an integer in a range of 1 to 1500. An asterisk (*) indicates a bonding site to another group in the block copolymer.

The groups $Q^1$, $R^1$, $R^2$, and $R^3$ plus the variable n in Formula (V) are the same as described above for the polydiorganosiloxane groups of Formula (I). Group $Q^3$ is the same as described above for Formula (III). Group $R^8$ is an alkylene having 2 to 10 carbon atoms. The alkylene can have at least 2 carbon atoms, at least 3 carbon atoms, at least 4 carbon atoms and up to 10 carbon atoms, up to 8 carbon atoms, up to 6 carbon atoms, or up to 4 carbon atoms.

The polydiorganosiloxane polyurethane is typically prepared by reacting a polydiorganosiloxane diol with a diisocyanate. The polydiorganosiloxane diol can be prepared by reacting a polydiorganosiloxane diamine of Formula (IX), which is described above, with a cyclic compound of Formula (X) as shown in Reaction Scheme B.

**Reaction Scheme B**

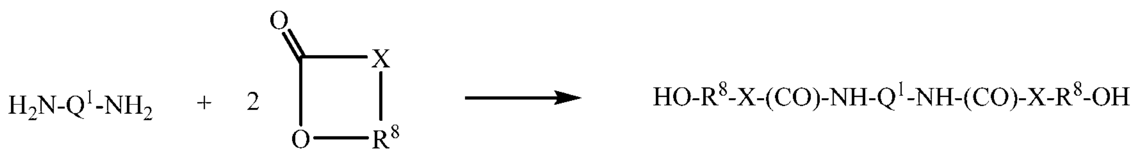

(IX) (X) (XI)

Groups $R^8$ and X in the cyclic compound of Formula (X) are the same as described above for Formula (V). Suitable cyclic compounds of Formula (X) include, but are not limited to, beta-propiolactone, gamma-butyrolacone, gamma-valerlactone, delta-valerlatone, caprolactone, and various cyclic carbonate compounds such as ethylene carbonate, propylene carbonate, and butylene carbonate.

The polydiogansiloxane diol of Formula (XI) can be reacted with a diisocyate of formula OCN-$Q^3$-NCO. Group $Q^3$ is the residue of a diisocyanate compound of formula OCN-$Q^3$-NCO minus the two isocyanato groups (-NCO). Suitable $Q^3$ groups are the same as described above for formation of polydiorganosiloxane polyurea block copolymers.

In addition to the polydiorganosiloxane diol of Formula (XI) and diisocyanate of formula OCN-$Q^3$-NCO in the reaction mixture used to form the block copolymer, an organic diol can also be present. The organic diol can function as a chain extender and is of formula HO-$Q^5$-OH where $Q^5$ is typically an alkylene having 1 to 20 carbon atoms, 1 to 10 carbon atoms, 1 to 6 carbon atoms, or 1 to 4 carbon atoms. Example of organic diols include, but are not limited to, ethylene diol, 1,3-propylene diol, 1,4-butylene diol, 1,5-pentalene diol, 1,6-hexylene diol, 1,3-cylcohexanedimethanol, and 1,4-cyclohexanedimethanol.

Methods of preparing suitable polydiorganosiloxane polyurethanes are further described in WO 2014/070604 (Yang et al.).

The core contains 45 to 80 weight percent of the silicone-containing block copolymer based on a total weight of the core. For example, the core can contain at least 45 weight percent, at least 50 weight percent, at least 55 weight percent, or at least 60 weight percent and up to 80 weight percent, up to 75 weight percent, up to 70 weight percent, up to 65 weight percent, or up to 60 weight percent of the silicone-containing block copolymer.

In addition to the silicone-containing block copolymer, core also includes a silicone tackifying resin. The silicone tackifying resin is added to enhance the adhesive properties of the core. The silicone tackifying resin is typically of an MQ resin having both $R'_3SiO_{1/2}$ units (M units) where R' is an unreactive group and $SiO_{4/2}$ units (Q units). Other useful MQ-type resins are MQT and MQD resins where D is $R'_2SiO_2$ and T is R'SiOs. Group R' is usually alkyl (e.g., methyl) or aryl (e.g., phenyl). In many embodiments, R' is methyl. Blends of these silicone tackifying resins can be used. The MQ silicone resins include both non-functional and functional resins. Functional silicone resins have one or more functionalities including, for example, silicon-bonded hydrogen, silicon-bonded alkenyl, or silanol groups.

The silicone tackifying resin often has a number average molecular weight of about 100 to about 50,000 Daltons. For example, the number average molecular weight can be at least 100 Daltons, at least 200 Daltons, at least 500 Daltons, or at least 1000 gram/mole can be up to 50,000 Daltons, up to 20,000 Daltons, up to 10,000 Daltons, or up to 5,000 Daltons.

Commercially available MQ silicone resins include SR-545 MQ resin from Momentive Performance Materials (Waterford, NY, USA) and DC2-7066 MQ resin from Dow Chemical (Midland, MI, USA). MQOH resins from Milliken Chemical (Spartanburg, SC, USA). Some of the silicone tackifying resins are provided from the supplier in a solvent such as toluene. The resins can be use as received or can be dried by any number of techniques known in the art to provide a MQ silicone resin at 100 percent non-volatile content. Suitable drying methods include, but are not limited to, spray drying, oven drying, steam separation, and the like.

The core contains 20 to 55 weight percent of the silicone tackifying resin based on a total weight of the core. The amount can be at least 20 weight percent, at least 25 weight percent, at least 30 weight percent, at least 35 weight percent, or at least 40 weight percent and up to 55 weight percent, up to 50 weight percent, up to 45 weight percent, or up to 40 weight percent.

The core can optionally further include fumed silica to function as a rheology modifier. The addition of fume silica often reduces the tackiness of the adhesive (e.g., it can reduce the peel strength) but tends to increase the modulus. The optional fumed silica can be present in an amount of 0 to 20 weight percent, 1 to 20 weight percent, 2 to 20 weight percent, 0 to 10 weight percent, 1 to 10 weight percent, or 2 to 10 weight percent based on a total weight of the core.

The core is a pressure-sensitive adhesive at temperatures up to 20°C, up to 10°C, up to 0°C or up to -10°C. In some embodiments, the core may function as a pressure-sensitive adhesive at even higher temperatures higher than 20°C such as up to 25°C, up to 30°C, up to 35°C, or even up to 40°C.

The core often is 90 to 90 weight percent of the entire core-sheath filament. For example, the filament is at least 90 weight percent, at least 91 weight percent, at least 92 weight percent, at least 93 weight percent, at least 94 weight percent, at least 95 weight percent and up to 99 weight percent, up to 98 weight percent, up to 97 weight percent, up to 96 weight percent, or at least 95 weight percent core.

<u>Sheath</u>

The sheath provides structural integrity to the core-sheath filament, as well as separating the adhesive core so that it does not adhere to itself (such as when the filament is provided in the form of a spool or roll) or so that is does not prematurely adhere to another surface. The sheath it typically selected to be thick enough to support the filament form factor and to allow for delivery of the core-sheath filament to a deposition location. On the other hand, the thickness

of the sheath is selected so that its presence does not adversely affect the overall adhesive performance of the core-sheath filament.

The sheath material is typically selected to have a melt flow index (MFI) that is less than or equal to 15 grams/10 minutes when measured in accord with ASTM D1238-13 at 190°C and with a load of 2.16 kilograms. Such a low melt flow index is indicative of a sheath material that has sufficient strength (robustness) to allow the core-sheath filament to withstand the physical manipulation required for handling such as for use with an additive manufacturing apparatus. During such processes, the core-sheath filament often needs to be unwound from a spool, introduced into the additive manufacturing apparatus, and then advanced into a nozzle for melting and blending without breaking. Compared to sheath materials with a higher melt flow index, the sheath materials with a melt flow index that is less than or equal to 15 grams/10 minutes are less prone to breakage (tensile stress fracture) and can be wound into a spool or roll having a relatively small radius of curvature. In certain embodiments, the sheath material exhibits a melt flow index of 14 grams/10 minutes or less, 13 grams/10 minutes or less, 11 grams/10 minutes or less, 10 grams/10 minutes or less, 8 grams/10 minutes or less, 7 grams/10 minutes or less, 6 grams/10 minutes or less, 5 grams/10 minutes or less, 4 grams/10 minutes or less, 3 grams/10 minutes or less, 2 grams/10 minutes or less, or 1 grams/10 minutes or less. If desired, various sheath materials can be blended (e.g., melted and mixed) together to provide a sheath composition having the desired melt flow index.

Low melt flow index values tend to correlate with high melt viscosities and high molecular weight. Higher molecular weight sheath materials tend to result in better mechanical performance. That is, the sheath materials tend to be more robust (i.e., the sheath materials are tougher and less likely to undergo tensile stress fracture). This increased robustness is often the result of increased levels of polymer chain entanglements. The higher molecular weight sheath materials are often advantageous for additional reasons. For example, these sheath materials tend to migrate less to adhesive/substrate interface in the final article; such migration can adversely affect the adhesive performance, especially under aging conditions. In some cases, however, block copolymers with relatively low molecular weights can behave like high molecular weight materials due to physical crosslinks. That is, the block copolymers can have low MFI values and good toughness despite their relatively low molecular weights.

The sheath materials are often semi-crystalline polymers that can provide robust mechanical properties even at relatively low molecular weight such as 100,000 Daltons. That is, sheath materials with a weight average molecular weight of at least 100,000 Daltons can often provide the toughness and elongation needed to form a stable filament spool. In many embodiments, the weight average molecular weight is at least 150,000 Daltons., at least 200,000 Daltons, at least 300,000 Daltons, at least 400,000 Daltons, or even at least 500,000 Daltons. The molecular weight can go up to, for example, 2,000,000 Daltons or even higher or up to 1,000,000 Daltons. Higher molecular weight materials often advantageously have lower melt flow index values.

As the melt flow index is lowered (such as to less than or equal to 15 grams/10 minutes), less sheath material is required to obtain the desired mechanical strength. That is, the thickness of the sheath layer can be decreased and its contribution to the overall longest cross-sectional distance (e.g., diameter) of the core-sheath filament can be reduced. This is advantageous because the sheath material may adversely impact the adhesive properties of the core pressure-sensitive adhesive if it is present in an amount greater than about 10 weight percent of the total weight of the filament.

For application to a substrate, the core-sheath filament is typically melted and mixed together before deposition on the substrate. The sheath material desirably is blended with the pressure-sensitive adhesive in the core without adversely impacting the performance of the pressure-sensitive adhesive. To blend the two compositions effectively, it is often desirable that the sheath composition is compatible with the core composition. Because the core contains a block copolymer with polydiorganosiloxane segments, the use of sheath materials that include polar groups such as oxy groups, carbonyl groups, amino groups, amido groups, or combinations thereof may be advantageous.

If the core-sheath filament is formed by co-extrusion of the core composition and the sheath composition, the melt viscosity of the sheath composition is desirably selected to be comparable to that of the core composition. If the melt viscosities are not sufficiently similar (such as if the melt viscosity of the core composition is significantly lower than that of the sheath composition), the sheath may not surround the core in the filament. The filament can then have exposed core regions and the filament may adhere to itself. Additionally, if the melt viscosity of the sheath core composition is significantly higher than the core composition, during melt blending of the core composition and the sheath composition during dispensing, the non-tacky sheath may remain exposed (not blended sufficiently with the core) and adversely impact formation of an adhesive bond with the substrate. The melt viscosities of the sheath composition to the melt viscosity of the core composition is in a range of 100:1 to 1:100, in a range of 50:1 to 1:50, in a range of 20:1 to 1:20, in a range of 10:1 to 1:10, or in a range of 5:1 to 1:5. In many embodiments, the melt viscosity of the sheath composition is greater than that of the core composition. In such situations, the viscosity of the sheath composition to the core composition is typically in a range of 100:1 to 1:1, in a range of 50:1 to 1:1, in a range of 20:1 to 1:1, in a range of 10:1 to 1:1, or in a range of 5:1 to 1:1.

In addition to exhibiting strength, the sheath material is non-tacky. A material is non-tacky if it passes a "Self-Adhesion Test", in which the force required to peel the material apart from itself is at or less than a predetermining

maximum threshold amount, without fracturing the material. The Self-Adhesion Test is described in the Examples below. Employing a non-tacky sheath allows the filament to be handled and optionally printed, without undesirably adhering to anything prior to deposition onto a substrate.

In certain embodiments, the sheath material exhibits a combination of low MFI (e.g., less than or equal to 15 grams/10 minutes) and moderate elongation at break (e.g., 100% or more as determined by ASTM D638-14 using test specimen Type IV) and low tensile stress at break (e.g., 10 MPa or more as determined by ASTM D638-14 using test specimen Type IV). A sheath having these properties tends to have the toughness suitable for use in FFF-type applications.

In some embodiments, to achieve the goals of providing structural integrity and a non-tacky surface, the sheath comprises a material selected from styrenic copolymers (e.g., styrenic block copolymers such as styrene-butadiene block copolymers), polyolefins (e.g., polyethylene, polypropylene, and copolymers thereof), ethylene vinyl acetates, polyurethanes, ethylene methyl acrylate copolymers, polyamides, (meth)acrylic block copolymers, poly(lactic acids), and the like. Depending on the method of making the core-sheath filament, it may be advantageous to at least somewhat match the polarity of the sheath polymeric material with that of the silicone-based block copolymer in the core.

Suitable styrenic materials for use in the sheath are commercially available and include, for example and without limitation, styrenic materials under the trade designation KRATON (e.g., KRATON D116 P, D1118, D1119, and A 1535) from Kraton Performance Polymers (Houston, TX, USA), under the trade designation SOLPRENE (e.g., SOLPRENE S-1205) from Dynasol (Houston, TX, USA), under the trade designation QUINTAC from Zeon Chemicals (Louisville, KY, USA), under the trade designations VECTOR and TAIPOL from TSRC Corporation (New Orleans, LA, USA), and under the trade designations K-RESIN (e.g., K-RESIN DK11) from Ineos Styrolution (Aurora, IL, USA).

Suitable polyolefins are not particularly limited and include, for example, polypropylene (e.g., a polypropylene homopolymer, a polypropylene copolymer, and/or blends comprising polypropylene) or polyethylene (e.g., a polyethylene homopolymer, a polyethylene copolymer, high density polyethylene ("HDPE"), medium density polyethylene ("MDPE"), low density polyethylene ("LDPE"), and combinations thereof). For instance, suitable commercially available LDPE resins include PETROTHENE NA217000 available from LyondellBasell (Rotterdam, Netherlands) with a MFI of 5.6 grams/10 minutes and MARLEX 1122 available from Chevron Phillips (The Woodlands, TX, USA). Suitable HDPE resins include ELITE 5960G from Dow Chemical Company (Midland, MI, USA) and HDPE HD 6706 series from ExxonMobil (Houston, TX, USA). Polyolefin block copolymers are available from Dow Chemical under the trade designation INFUSE (e.g., INFUSE 9807).

Suitable commercially available thermoplastic polyurethanes include, for instance, ESTANE 58213 and ESTANE ALR 87A available from the Lubrizol Corporation (Wickliffe, OH, USA).

Suitable ethylene vinyl acetate ("EVA") polymers (i.e., copolymers of ethylene with vinyl acetate) for use in the sheath include resins from Dow, Inc. (Midland, MI) available under the trade designation ELVAX. Typical grades range in vinyl acetate content from 9 to 40 weight percent and a melt flow index of as low as 0.3 grams/10 minutes (per ASTM D1238-13). One exemplary material is ELVAX 3135 SB with a MFI of 0.4 grams/10 minutes. Suitable EVAs also include high vinyl acetate ethylene copolymers from LyondellBasell (Houston, TX) available under the trade designation ULTRATHENE. Typical grades range in vinyl acetate content from 12 to 18 weight percent. Suitable EVAs also include EVA copolymers from Celanese Corporation (Dallas, TX) available under the trade designation ATEVA. Typical grades range in vinyl acetate content from 2 to 26 weight percent.

Suitable polyamide materials for use in the sheath include nylon (e.g., nylon 6,6), a nylon terpolymeric material from Nylon Corporation of America (Manchester, NH, USA) under the trade designation NYCOA (e.g., NYCOA XN-287-CAY with a MFI of 5.1 grams/10 minutes), and a polyamide-polyether block copolymer such as that commercially available under the trade designation PEBAX (e.g., PEBAX MV 1074SA) from Arkema Inc. (King of Prussia, PA, USA).

Suitable polyethylene methyl acrylate) for use in the sheath include resins from Dow Inc. (Midland, MI, USA) under the trade designation ELVALOY (e.g., ELVALOY 1330 with 30 percent methyl acrylate and a MFI of 3.0 grams/10 minutes, ELVALOY 1224 with 24 percent methyl acrylate and a MFI of 2.0 grams/10 minutes, and ELVALOY 1609 with 9 percent methyl acrylate and a MFI of 6.0 grams/10 minutes).

Suitable anhydride modified ethylene acrylate resins are available from Dow under the trade designation BYNEL such as BYNEL 21E533 with a MFI of 7.3 grams/10 minutes and BYNEL 30E753 with a MFI of 2.1 grams/10 minutes.

Suitable ethylene (meth)acrylic copolymers for use in the sheath include resins from Dow, Inc. under the trade designation NUCREL (e.g., NUCREL 925 with a MFI of 25.0 grams/10 minutes and NUCREL 3990 with a MFI of 10.0 grams/10 minutes). The NUCREL 925 can be used if it is blended with another polymeric material such that the blend has lower MFI such as no greater than 15 grams/10 minutes.

Suitable (meth)acrylic block copolymers for use in the sheath include block copolymers from Kuraray (Chiyoda-ku, Tokyo, JP) under the trade designation KURARITY (e.g., KURARITY LA2250 and KURAITY LA4285). KURARITY LA2250, which has a MFI of 22.7 grams/10 minutes, is an ABA block copolymer with poly(methyl methacrylate) as the A blocks and poly(n-butyl acrylate) as the B block. About 30 weight percent of this polymer is poly(methyl methacrylate). The KURARITY LA2250 can be used in the sheath provided it is blended with another sheath material having a lower

MFI such as, for example, KURARITY LA4285 so that the blend has a MFI that is no greater than 15 grams/10 minutes. KURARITY LA4285, which has a MFI of 1.8 grams/10 minutes, is an ABA block copolymer with poly(methyl methacrylate) as the A blocks and poly(n-butyl acrylate as the B block. About 50 weight percent of this polymer is poly(methyl methacrylate). Varying the amount of poly(methyl methacrylate) in the block copolymer alters its glass transition temperature and its toughness.

Suitable poly(lactic acid) for use in the sheath include those available from Natureworks, LLC (Minnetonka, NM, USA) under the trade designation INGEO (e.g., INGEO 4043D General Purpose Fiber grade).

The sheath typically makes up 1 to 10 weight percent of the total weight of the core-sheath filament. The amount of the sheath is selected to provide a sufficiently robust core-sheath filament that can be easily handled without rupture or tearing of the sheath on the filament. The amount of the sheath material used in the core-sheath filament is often selected to be as low as possible because the sheath composition typically does not enhance (and can often diminish) the performance of the pressure-sensitive adhesive composition within the core. The amount of the sheath in the core-sheath filament can be at least 1 weight percent, at least 2 weight percent, at least 3 weight percent, at last 4 weight percent, at least 5 weight percent and up to 10 weight percent, up to 9 weight percent, up to 8 weight percent, up to 7 weight percent, up to 6 weight percent, or up to 5 weight percent based on the total weight of the core-sheath filament.

Method of printing

In a third aspect, a method of printing a pressure-sensitive adhesive is provided. The method includes forming a core-sheath filament as described above. The method further includes melting and mixing the core-sheath filament to form a molten composition. The method still further includes dispensing the molten composition through a nozzle onto a substrate. The molten composition can be formed before reaching the nozzle, can be formed by mixing in the nozzle, or can be formed during dispensing through the nozzle, or a combination thereof. Preferably, the sheath composition is uniformly blended throughout the core composition.

Fused Filament Fabrication, which is also known under the trade designation "FUSED DEPOSITION MODELING" from Stratasys, Inc., Eden Prairie, Minn., is a process that uses a thermoplastic strand fed through a hot can to produce a molten aliquot of material from an extrusion head. The extrusion head extrudes a bead of material in 3D space as called for by a plan or drawing (e.g., a computer aided drawing (CAD file)). The extrusion head typically lays down material in layers, and after the material is deposited, it fuses.

One suitable method for printing a core-sheath filament comprising an adhesive onto a substrate is a continuous non-pumped filament fed dispensing unit. In such a method, the dispensing throughput is regulated by a linear feed rate of the core-sheath filament allowed into the dispense head. In most currently commercially available FFF dispensing heads, an unheated filament is mechanically pushed into a heated zone, which provides sufficient force to push the filament out of a nozzle. A variation of this approach is to incorporate a conveying screw in the heated zone, which acts to pull in a filament from a spool and to create pressure to dispense the material through a nozzle. Although addition of the conveying screw into the dispense head adds cost and complexity, it does allow for increased throughput, as well as the opportunity for a desired level of component mixing and/or blending. A characteristic of filament fed dispensing is that it is a true continuous method, with only a short segment of filament in the dispense head at any given point.

There can be several benefits to filament fed dispensing methods compared to traditional hot melt adhesive deposition methods. First, filament fed dispensing methods typically permits quicker changeover to different adhesives. Also, these methods do not use a semi-batch mode with melting tanks, and this minimizes the opportunity for thermal degradation of an adhesive and associated defects in the deposited adhesive. Filament fed dispensing methods can use materials with higher melt viscosity, which affords an adhesive bead that can be deposited with greater geometric precision and stability without requiring a separate curing or crosslinking step. In addition, higher molecular weight raw materials can be used within the adhesive because of the higher allowable melt viscosity. This is advantageous because uncured hot melt pressure sensitive adhesives containing higher molecular weight raw materials can have significantly improved high temperature holding power while maintaining stress dissipation capabilities.

The form factor for FFF filaments is usually a concern. For instance, consistent cross-sectional shape and longest cross-sectional distance (e.g., diameter) assist in cross-compatibility of the core-sheath filaments with existing standardized FFF filaments such as ABS or polylactic acid (PLA). In addition, consistent longest cross-section distance (e.g., diameter) helps to ensure the proper throughput of adhesive because the FFF dispense rate is generally determined by the feed rate of the linear length of a filament. Suitable longest cross-sectional distance variation of the core-sheath filament according to at least certain embodiments when used in FFF includes a maximum variation of 20 percent over a length of 50 cm, or even a maximum variation of 15 percent over a length of 50 cm.

Extrusion-based layered deposition systems (e.g., fused filament fabrication systems) are useful for making articles including printed adhesives in methods of the present disclosure. Deposition systems having various extrusion types of are commercially available, including single screw extruders, twin screw extruders, hot-end extruders (e.g., for filament feed systems), and direct drive hot-end extruders (e.g., for elastomeric filament feed systems). The deposition

systems can also have different motion types for the deposition of a material, including using XYZ stages, gantry cranes, and robot arms. Common manufacturers of additive manufacturing deposition systems include Stratasys, Ultimaker, MakerBot, Airwolf, WASP, MarkForged, Prusa, Lulzbot, BigRep, Cosin Additive, and Cincinnati Incorporated. Suitable commercially available deposition systems include for instance and without limitation, BAAM, with a pellet fed screw extruder and a gantry style motion type, available from Cincinnati Incorporated (Harrison, OH); BETABRAM Model P 1, with a pressurized paste extruder and a gantry style motion type, available from Interelab d.o.o. (Senovo, Slovenia); AM1, with either a pellet fed screw extruder or a gear driven filament extruder as well as a XYZ stages motion type, available from Cosine Additive Inc. (Houston, TX); KUKA robots, with robot arm motion type, available from KUKA (Sterling Heights, MI); and AXIOM, with a gear driven filament extruder and XYZ stages motion type, available from AirWolf 3D (Fountain Valley, CA).

Three-dimensional articles including a printed adhesive can be made, for example, from computer-aided design (CAD) models in a layer-by-layer manner by extruding a molten adhesive onto a substrate. Movement of the extrusion head with respect to the substrate onto which the adhesive is extruded is performed under computer control, in accordance with build data that represents the final article. The build data is obtained by initially slicing the CAD model of a three-dimensional article into multiple horizontally sliced layers. Then, for each sliced layer, the host computer generates a build path for depositing roads of the composition to form the three-dimensional article having a printed adhesive thereon. In select embodiments, the printed adhesive comprises at least one groove formed on a surface of the printed adhesive. Optionally, the printed adhesive forms a discontinuous pattern on the substrate.

The substrate onto which the molten adhesive is deposited is not particularly limited. In many embodiments, the substrate comprises a polymeric part, a glass part, or a metal part. Use of additive manufacturing to print an adhesive on a substrate may be especially advantageous when the substrate has a non-planar surface, for instance a substrate having an irregular or complex surface topography.

The core-sheath filament can be extruded through a nozzle carried by an extrusion head and deposited as a sequence of roads on a substrate in an x-y plane. The extruded molten adhesive fuses to previously deposited molten adhesive as it solidifies upon a drop-in temperature. This can provide at least a portion of the printed adhesive. The position of the extrusion head relative to the substrate is then incremented along a z-axis (perpendicular to the x-y plane), and the process is repeated to form at least a second layer of the molten adhesive on at least a portion of the first layer. Changing the position of the extrusion head relative to the deposited layers may be carried out, for example, by lowering the substrate onto which the layers are deposited. The process can be repeated as many times as necessary to form a three-dimensional article including a printed adhesive resembling the CAD model. Further details can be found, for example, Turner, B.N. et al., "A review of melt extrusion additive manufacturing processes: I. process design and modeling"; Rapid Prototyping Journal 20/3 (2014) 192-204. In certain embodiments, the printed adhesive comprises an integral shape that varies in thickness in an axis normal to the substrate. This is particularly advantageous in instances where a shape of adhesive is desired that cannot be formed using die cutting of an adhesive. In certain embodiments a single adhesive layer may be advantageous to minimize the amount of adhesive that is consumed or to minimize the thickness of the bond line.

A variety of fused filament fabrication 3D printers may be useful for carrying out the method according to the present disclosure. Many of these are commercially available under the trade designation "FDM" from Stratasys, Inc., Eden Prairie, MN, and subsidiaries thereof. Desktop 3D printers for idea and design development and larger printers for direct digital manufacturing can be obtained from Stratasys and its subsidiaries, for example, under the trade designations "MAKERBOT REPLICATOR", "UPRINT", "MOJO", "DIMENSION", and "FORTUS". Other 3D printers for fused filament fabrication are commercially available from, for example, 3D Systems, Rock Hill, SC, and Airwolf 3D, Costa Mesa, CA.

In certain embodiments, the method further comprises mixing the molten composition (e.g., mechanically) prior to dispensing the molten composition. In other embodiments, the process of being melted in and dispensed through the nozzle may provide sufficient mixing of the composition such that the molten composition is mixed in the nozzle, during dispensing through the nozzle, or both.

The temperature of the substrate onto which the adhesive can be deposited may also be adjusted to promote the fusing of the deposited adhesive. In the method according to the present disclosure, the temperature of the substrate may be, for example, at least about 100°C, 110°C, 120°C, 130°C, or 140°C up to 175°C or 150°C.

The printed adhesive prepared by the method according to the present disclosure may be an article useful in a variety of industries, for example, the apparel, architecture, business machines products, construction, consumer, defense, dental, electronics, educational institutions, heavy equipment, industrial, jewelry, medical, toys industries, and transportation (automotive, aerospace, and the like). The composition of the sheath and the core can be selected so that, if desired, the printed adhesive is clear.

Various embodiments are provided that relate to a core-sheath filament, a method of making the core-sheath filament, or a method of printing a pressure-sensitive adhesive using the filament.

Embodiment 1A is a core-sheath filament that includes a core containing a pressure-sensitive adhesive and a

sheath surrounding the core. The pressure-sensitive adhesive in the core contains 1) 45 to 80 weight percent of a silicone-containing block copolymer and 2) 20 to 55 weight percent of a silicone tackifying resin based on a total weight of the core. The silicone-containing block copolymer includes a first block containing a polydiorganosiloxane and a second block that is free of a silicone. The sheath contains a non-tacky thermoplastic material that is free of a silicone. The core-sheath filament has a longest cross-sectional distance (e.g., diameter) in a range of 1 to 20 millimeters.

Embodiment 2A is the core-sheath filament of embodiment 1A, wherein the silicone-containing block copolymer is a polydiorganosiloxane polyoxamide, polydiorganosiloxane polyurea, polydiorganosiloxane polyamide, or polydiorganosiloxane polyurethane.

Embodiment 3A is the core-sheath filament of embodiment 1A or 1B, wherein the block copolymer is a polydiorganosiloxane polyoxamide having at least two repeat units of Formula (II).

$$*\text{-}NR^4\text{-}Q^2\text{-}NR^4\text{-}(CO)\text{-}(CO)\text{-}NR^3\text{-}Q^1\text{-}NR^3\text{-}(CO)\text{-}(CO)\text{-}* \qquad (II)$$

Group $Q^1$ is a polydiorganosiloxane of formula $-R^2\text{-}Si(R^1)_2\text{-}[O\text{-}Si(R^1)_2]_n\text{-}O\text{-}Si(R^1)_2\text{-}R^2\text{-}$. Each $R^1$ is independently an alkyl, haloalkyl, aralkyl, substituted aralkyl, aryl, substituted aryl, or alkenyl. Each $R^2$ is independently an alkylene, arylene-alkylene, or a combination thereof. Each $R^3$ is independently hydrogen, alkyl, aralkyl, or aryl. Each $R^4$ is independently hydrogen, alkyl, or part of a ring structure with group $Q^2$. Group is the residue of a diamine of formula $R^4HN\text{-}Q^2\text{-}NHR^4$ minus the two amino groups $-NHR^4$. The variable n is an integer in a range of 1 to 1500 and an asterisk (*) indicates a bonding site to another group in the block copolymer.

Embodiment 4A is the core-sheath filament of embodiment 1A or 2A, wherein the block copolymer is a polydiorganosiloxane polyurea having at least two repeat units of Formula (III).

$$*\text{-}NH\text{-}Q^3\text{-}NH\text{-}(CO)\text{-}NR^3\text{-}Q^1\text{-}NR^3\text{-}(CO)\text{-}* \qquad (III)$$

Group $Q^1$ is a polydiorganosiloxane of formula $-R^2\text{-}Si(R^1)_2\text{-}[O\text{-}Si(R^1)_2]_n\text{-}O\text{-}Si(R^1)_2\text{-}R^2\text{-}$. Each $R^1$ is independently an alkyl, haloalkyl, aralkyl, substituted aralkyl, aryl, substituted aryl, or alkenyl. Each $R^2$ is independently an alkylene, arylene-alkylene, or a combination thereof. Each $R^3$ is independently hydrogen, alkyl, aralkyl, or aryl. Group $Q^3$ is the residue of a diisocyanate of formula $OCN\text{-}Q^3\text{-}NCO$ minus two isocyanato groups (-NCO). The variable n is an integer in a range of 1 to 1500 and an asterisk (*) indicates a bonding site to another group in the block copolymer.

Embodiment 5A is the core-sheath filament of embodiment 1A or 2A, wherein the block copolymer is a polydiorganosiloxane polyamide having at least two repeat units of Formula (IV).

$$*\text{-}Q^4\text{-}(CO)\text{-}NR^4\text{-}Q^1\text{-}NR^4\text{-}(CO)\text{-}* \qquad (IV)$$

Group $Q^1$ is a polydiorganosiloxane of formula $-R^2\text{-}Si(R^1)_2\text{-}[O\text{-}Si(R^1)_2]_n\text{-}O\text{-}Si(R^1)_2\text{-}R^2\text{-}$. Each $R^1$ is independently an alkyl, haloalkyl, aralkyl, substituted aralkyl, aryl, substituted aryl, or alkenyl. Each $R^2$ is independently an alkylene, arylene-alkylene, or a combination thereof. Each $R^3$ is independently hydrogen, alkyl, aralkyl, or aryl. Group $Q^4$ is the residue of a diacid chloride of formula $Cl\text{-}(CO)\text{-}Q^4\text{-}(CO)\text{-}Cl$ minus the two -(CO)-Cl groups or a diester of formula $R^7O\text{-}(CO)\text{-}Q^4\text{–}(CO)\text{-}OR^7$ minus two $-(CO)\text{-}OR^7$ groups where $R^7$ is an alkyl. The variable n is an integer in a range of 1 to 1500 and an asterisk (*) indicates a bonding site to another group in the block copolymer.

Embodiment 6A is the core-sheath filament of embodiment 1A or 2A, wherein the block copolymer is a polydiorganosiloxane polyurethane having at least two repeat units of Formula (V).

$$*\text{-}NH\text{-}Q^3\text{-}NH\text{-}(CO)\text{-}O\text{-}R^8\text{-}X\text{-}(CO)\text{-}NR^3\text{-}Q^1\text{-}NR^3\text{-}(CO)\text{-}X\text{-}R^8\text{-}O\text{-}(CO)\text{-}* \qquad (V)$$

Group $Q^1$ is a polydiorganosiloxane of formula $-R^2\text{-}Si(R^1)_2\text{-}[O\text{-}Si(R^1)_2]_n\text{-}O\text{-}Si(R^1)_2\text{-}R^2\text{-}$. Each $R^1$ is independently an alkyl, haloalkyl, aralkyl, substituted aralkyl, aryl, substituted aryl, or alkenyl. Each $R^2$ is independently an alkylene, arylene-alkylene, or a combination thereof. Each $R^3$ is independently hydrogen, alkyl, aralkyl, or aryl. Group $Q^3$ is the residue of a diisocyanate of formula $OCN\text{-}Q^3\text{-}NCO$ minus two isocyanato groups (-NCO). Group X is $-CH_2\text{-}$ or -O- and $R^8$ is an alkylene. The variable n is an integer in a range of 1 to 1500 and an asterisk (*) indicates a bonding site to another group in the block copolymer.

Embodiment 7A is the core-sheath filament of any one of embodiments 1A to 6A, wherein the pressure-sensitive adhesive has a glass transitions temperature no greater than 40°C, no greater than 30°C, or no greater than 20°C.

Embodiment 8A is the core-sheath filament of any one of embodiments 1A to 7A, wherein the sheath exhibits a melt flow index of less than or equal to 15 grams per 10 minutes as determined using ASTM D1238-13 at 190°C and with a load (weight) of 2.16 kg.

Embodiment 9A is the core-sheath filament of any one of embodiments 1A to 8A, wherein the core-sheath filament comprises 1 to 10 weight percent sheath and 90 to 99 weight percent core based on a total weight of the core-sheath filament.

Embodiment 1B is a method of making a core-sheath filament. The method includes forming a core composition that is a pressure-sensitive adhesive. The pressure-sensitive adhesive contains 1) 45 to 80 weight percent of a silicone-containing block copolymer comprising a first block comprising a polydiorganosiloxane and a second block that is free of a silicone and 2) 20 to 55 weight percent of a silicone tackifying resin based on a total weight of the core. The method further includes forming a sheath composition comprising a non-tacky thermoplastic material that is free of a silicone. The method still further includes wrapping the sheath composition around the core composition, wherein the core-sheath filament has a longest cross-sectional distance in a range of 1 to 20 millimeters.

Embodiment 2B is the method of embodiment 1B, wherein the wrapping the sheath composition around the core composition comprises co-extruding the core composition and the sheath composition such that the sheath composition surrounds the core composition.

Embodiment 3B is the method of embodiment 1A or 1B, wherein the core-filament comprises 90 to 99 weight percent core and 1 to 10 weight percent sheath based on a total weight of the core-sheath filament.

Embodiment 4B is the method of any one of methods 1B to 3B, wherein the silicone-containing block copolymer is a polydiorganosiloxane polyoxamide, polydiorganosiloxane polyurea, polydiorganosiloxane polyamide, or polydiorganosiloxane polyurethane.

Embodiment 1C is a method of printing a pressure-sensitive adhesive. The method includes forming a core-sheath filament as described in Embodiment 1B, melting and mixing the core-sheath filament to form a molten composition, and dispensing the molten composition onto a substrate.

## Examples

Unless otherwise noted, all parts, percentages, ratios, etc. in the Examples and the rest of the specification are by weight. Unless otherwise indicated, all other reagents were obtained, or are available from fine chemical vendors such as Sigma-Aldrich Company, St. Louis, Missouri, or may be synthesized by known methods. The following abbreviations are used in this section: min = minutes, s = second, g = gram, mg = milligram, kg = kilogram, m = meter, centimeter = cm, mm = millimeter, $\mu$m = micrometer or micron, °C = degrees Celsius, °F = degrees Fahrenheit, N = Newton, oz = ounce, Pa=Pascal, MPa = mega Pascal, and rpm = revolutions per minute.

Table 1 (below) lists materials used in the examples and their sources.

TABLE 1. Materials List

| Material | Description |
|---|---|
| ELVALOY 1330 | Ethylene methyl acrylate, obtained under the trade designation "ELVALOY1330" from Dow Inc., Midland, MI, USA |
| LDPE NA217000 | Low density polyethylene, obtained under the trade designation "PETROTHENE NA217000" from Lyondell Bassell, Houston, TX, USA |
| XN-287-CAY | Nylon terpolymer, obtained under the trade designation "NYCOA XN-287-CAY from Nylon Corporation of America, Manchester, NH, USA |
| LA2250 | PMMA-b-PnBA-b-PMMA A-B-A type block co-polymer. (approximately 30 wt% PMMA), obtained under the trade designation "KURARITY LA2250" from Kuraray Chiyoda-ku, Tokyo, Japan |
| LA4285 | PMMA-b-PnBA-b-PMMA A-B-A type block co-polymer. (about 50wt% PMMA), obtained under the trade designation "KURARITY LA4285" from Kuraray Chiyoda-ku, Tokyo, Japan |
| SBC-1 | Silicone Block Copolymer-1, which is a polydiorganosiloxane-polyurea block copolymer prepared using a method similar to that described in U.S. Patent 6,569,521 |
| SBC-2 | Silicone Block Copolymer-2, which is a polydiorganosiloxane-polyoxamide block copolymer prepared using a method similar to that described in U.S. Patent 8,765,881 |
| SR-545 | MQ silicone resin in toluene, obtained under the trade designation "SR-545" from Momentive Performance Materials, Inc., Waterford, NY |
| Ethyl acetate | Solvent obtained from BDH Chemicals, Radnor, PA |
| LOPAREX 7350/7300 | Dual-sided silicone-coated 2 mil PET film release liner, obtained under the trade designation "LOPAREX 7350/7300" from Loparex, Hammond, WI |

(continued)

| Material | Description |
|---|---|
| Plasma-PET | A polyester terephthalate film having a thickness of 0.002 inch (51 micrometers) primed on one side with a plasma treatment as described in U.S. Patent No. 4,828,871 (Strobel et al.) |
| 1R82001 | Single-sided fluorosilicone-coated release liner on 2 mil PET with relatively tight release from Siliconature, Godega di Sant'Urbano, Italy |
| 1R88001 | Single-sided fluorosilicone-coated release liner on 2 mil PET with relatively easy release from Siliconature, Godega di Sant'Urbano, Italy |
| FS05 | Single-sided fluorosilicone-coated release liner on 3.2 mil SCK with intermediate release from Ahlstrom-Munksjö North America Specialty Solutions, Kaukauna, WI |

## TEST PROCEDURES

*Melt Flow Index Test Method for All Samples*

Melt flow index (MFI) was conducted on all samples following the method set forth in ASTM D1238-13 (*Standard Test Method for Melt Flow Rates of Thermoplastics by Extrusion Platometer,* latest revision in 2013), Procedure A. The equipment used was a Tinius Olsen MP 987 Extrusion Plastometer (Melt Indexer), with the standard die dimensions for Procedure A. Conditions for the test were a temperature of 190 °C and a weight of 2.16 kg. A total of 8-19 replicates were performed to determine statistics, namely average MFI (in units of g/10 minutes), standard deviation of the MFI, and the 95% confidence interval about the mean.

*Melt Flow Index Literature Method*

The MFI literature method was reported as ASTM D1238-13 with a 2.16 kg load and measured at 190°C and it is expected that those values are directly comparable to the tested MFI values reported in Table 4 in the results section.

*Method for Calculating Melt Flow Index of Polymer Blend from Homopolymer Melt Flow Index*

The MFI of a polymer blend can be approximated as:

$$\log(MFI_{Final}) = X_1 * \log(MFI_1) + X_2 * \log(MFI_2)$$

where $X_1$ and $X_2$ are the weight fractions of each polymer $X_i$ and the $MFI_1$ and $MFI_2$ are the melt flow indices of the virgin polymers MFI. Below is table for such calculations:

| Blend | Polymer 1 | Polymer 2 | MFI Polymer 1 | MFI Polymer 2 | X1 | X2 | Blend MFI |
|---|---|---|---|---|---|---|---|
| 50/50 | LA2250 | LA4285 | 22.7 | 1.84 | 0.5 | 0.5 | 6.46 |
| 67/33 | LA2250 | LA4285 | 22.7 | 1.84 | 0.67 | 0.33 | 9.91 |

*Shear Strength Test Method*

Shear tests were conducted using 12.7 mm wide adhesive tapes prepared in the examples. A stainless-steel panel was cleaned by wiping (first with heptane and then with acetone) and drying. Tapes were applied to the panel such that a 12.7 mm by 25.4 mm portion of each adhesive tape was in firm contact with the panel and the trailing end portion of each tape was free (i.e. not attached to the panel). The panel with tape was held in a rack so that the panel formed an angle of 180° with the extended free end and a 1 kg weight was attached to the free end. The test was conducted under controlled temperature and humidity conditions and the time elapsed for each tape to separate from the test panel was recorded as the shear strength in minutes. Three shear tests were performed for each adhesive sample and the results averaged.

*180° Peel Test Method*

Peel adhesion force was measured using tapes prepared in the example section.

For testing adhesion to stainless steel, a stainless-steel panel was cleaned by wiping (first with heptane and then with acetone) and drying. Tapes measuring 12.7 mm wide by 10 to 12 cm long were adhered to the panel by rolling with a 2 kg hard rubber roller 2 times. The free end of the adhesive strip was doubled back so that the angle of removal was 180° and attached to the horizontal arm of an adhesion tester scale (Slip/peel tester, obtained from Instrumentors Inc. Strongsville, OH, USA). The stainless-steel plate was attached to the platform that moved at 12 inches/minutes (30.5 cm/minutes) away from the scale. The peel test was started 20 minutes after the tape was applied to the test panel allowing dwell time for the adhesive to build. The first 2 seconds of each measurement was discarded and the average of the peel forces during the next 5 seconds of peel testing was recorded in ounces per width of the adhesive tape sample (oz/0.5 in). Three peel tests were run for each sample and averaged to yield the peel force value reported in N/cm.

For testing the adhesion to glass, the adhesive was tested on the air side of float glass (sometimes referred to as soda lime glass) purchased from Northwestern Glass (Fridley, MN, USA). The procedure was the same as described above for adhesion to stainless steel.

*180° Release Liner Test Method and Readhesion (Subsequent Peel) Test Method*

Release force was measured using tapes that were laminated to release liners as described in the example section. Readhesion (subsequent peel) was performed using the adhesive strip exposed after liner removal from these samples.

For release testing a 12.7 mm wide by 10 to 12 cm long sample was applied lengthwise onto the platen surface of a peel adhesion tester (an IMASS SP-2100 tester, obtained from IMASS, Inc., Accord, MA) using 3M Double Coated Paper Tape 410M (available from 3M Company, St. Paul, MN, USA). The release liner was peeled from the adhesive at an angle of 180 degrees and at speeds of 30.5 cm/minute and 228.6 cm/minute. For the tests run at 30.5 cm/min, the first second of each measurement was discarded and the average of the release forces during the next 5 seconds of release testing was recorded in grams per width of the adhesive tape sample (g/0.5 in). At least three release tests were run for each sample and averaged to yield the release force value reported in N/cm. For the tests run at 228.6 cm/min, the 0.5 seconds of each measurement was discarded and the average of the release forces during the next 2 seconds of release testing was recorded in grams per width of the adhesive tape sample (g/0.5 in). At least two release tests were run for each sample and averaged to yield the release force value reported in N/cm.

Readhesion / subsequent peel samples were prepared by applying the adhesive strip exposed by the release test to a clean glass plate using two back and forth passes (four passes total) with a with a 4.4 cm wide two kilogram rubber roller. Readhesion was measured without dwell time by measuring the force required to peel the adhesive from the plate at an angle of 180 degrees and at and at speeds of 30.5 cm/minute and 228.6 cm/minute. No dwell was used in this test to see the effect of any fluorinated material that may have transferred from the fluorosilicone release liner to the adhesive surface reducing the readhesion. The glass was cleaned before testing by wiping with Novec HFE 7500 (available from 3M Company) and then subsequently by wiping with heptane, then MEK and then IPA between each test. For the tests run at 30.5 cm/min, the first second of each measurement was discarded and the average of the readhesion forces during the next 5 seconds of readhesion testing was recorded in grams per width of the adhesive tape sample (g/0.5 in). At least three readhesion tests were run for each sample and averaged to yield the readhesion force value reported in N/cm. For the tests run at 228.6 cm/min, the 0.5 seconds of each measurement was discarded and the average of the readhesion forces during the next 2 seconds of readhesion testing was recorded in grams per width of the adhesive tape sample (g/0.5 in). At least two readhesion tests were run for each sample and averaged to yield the readhesion force value reported in N/cm. For readhesion testing the adhesive was always tested on the air side of float glass (sometimes referred to as soda lime glass) purchased from Northwestern Glass (Fridley, MN, USA).

*Self-Adhesion Test Method and Results*

The Self-Adhesion Test was conducted on films of the sheath material to determine whether candidate sheath materials would meet the requirement of being "non-tacky". Coupons (25 millimeters x 75 millimeters x 0.8 millimeters) were cut out. For each material two coupons were stacked on each other and placed on a flat surface within an oven. A 750 gram weight (43 millimeters diameter, flat bottom) was placed on top of the two coupons, with the weight centered over the films. The oven was heated to 50 degrees Celsius, and the samples were left at that condition for 4 hours, and then cooled to room temperature. A static T-peel test was used to evaluate pass/fail. The end of one coupon was fixed to an immobile frame, and a 250 g weight was attached to the corresponding end of the other coupon with a binder clip. If the films were flexible and began to peel apart, they formed a T-shape. If the two coupons could be separated with the static 250 gram load within 3 minutes of applying the weight to the second coupon, it was considered a pass and

was non-tacky. Otherwise, if the two coupons remained adhered, it was considered a fail.

The following sheath materials were evaluated and passed the Self-Adhesion Test: BYNEL 21E522, BYNEL 30E753, ELVALOY 1224, ELVALOY 1330, ELVALOY 1609, ELVAX 3135 SB, 50:50 blend (by weight) of KURARITY LA2250 and KURARITY LA4285, 67:33 blend (by weight) of KURARITY LA2250 and KURARITY LA4285, NA217000 LDPE, NUCREL 925, NUCREL 3990, and XN-287-CAY. Some of these materials are described more fully in the Detailed Description section above.

*Tensile Testing, Polymer Dogbone for Strain Elongation at Break*

Tensile testing was performed in accordance with "ASTM Standard D638-10: Standard Test Method for Tensile Properties of Plastics" using the following test parameters.

- Specimen Type: Type IV dogbone (thickness shown in Table 4)
- Test Apparatus: 100 kN MTS electromechanical load frame with pneumatic grips and ARAMIS digital image correlation system
- Load Cell: 2.5kN Load Capacity MTS
- Crosshead Displacement (Nominal Strain Rate): 50 mm/min (1.5/min)
- Pre-Test Conditioning: 23°C / 50% Relative Humidity
- Atmospheric Conditions During Testing: 22 C / 39% Relative Humidity
- Sample Size: A minimum of five test specimens were tested for each sample
- Extensometer Description: ARAMIS 4M 3D Digital Image Correlation System with Titanar 2mm camera lenses and ARAMIS Professional analysis software

CORE 1 (C1) SYNTHESIS: *Preparation of polydiorganosiloxane polyoxamide Block Copolymer (*SBC-2*) containing pressure-sensitive adhesives used in Comparative Example 1 (CE1), Examples 1-4 (EXI - EX4) and Comparative Examples 4-8 (CE4-CE8)*

The polydiorganosiloxane polyoxamide elastomer, which had number average molecular weight of about 20,000 Daltons (amine equivalent weight of about 10,000 g/mole), was prepared like that described in Example 12 of US Patent No. 8,765,881. MQ resin tackifier resin (SR 545), was added in an amount to provide an elastomer to tackifier weight ratio of 1:1. The resulting mixture was diluted with ethyl acetate in a glass jar that was then tightly sealed and placed on a roller at about 2 to 6 rpm for at least 24 hours prior to coating. The resulting solution contained a calculated amount of 35 weight percent solids.

CORE 2 (C2) SYNTHESIS: *Preparation of polydiorganosiloxane polyurea block copolymer (SBC-1) containing pressure-sensitive adhesive used in Comparative Examples 2-3 (CE2-CE3) and Examples 5-7 (EX5-EX7)*

The silicone-polyurea block copolymer-based pressure sensitive adhesive was prepared according to the method described for Example 28 in US Patent No. 6,569,521 (Sheridan et al.). The viscosity of the polymeric material was 12,6000 cps as measured using a Brookfield viscometer with a LV Spindle #4 at 30 revolutions per minute. The final pressure sensitive adhesive solution containing approximately 30 weight percent solids and having a silicone-polyurea block copolymer to MQ tackifier resin (SR-545) weight ratio of 1:1. The solution viscosity of the SBC-1 PSA solution is 12,600 cps by Brookfield, measured with an LV Spindle #4 at 30 rpm.

SHEATH PREPARATION: *Preparation of a blended thermoplastic material used for Example 4 (EX4) and Example 7 (EX7)*

The batch preparation of this sheath film was carried out using a Brabender Plasti-corder unit equipped with an electrically heated three-part mixer with a capacity of approximately 55 $cm^3$ and high shear counter-rotating blades. The mixer was preheated to 150°C and set at a mixing speed of 60 rpm and 25 g of each of the acrylic block copolymer resins (LA2250 and LA4285) was added directly to the top of the mixing barrel totaling 50 g. The mixing operation was run for 5 minutes, at which time the mixture appeared homogeneous. After removal from the mixer, the bulk material was hot melt pressed on a Carver press at 140°C to yield a 11.3 mil thick film.

CORE-SHEATH FILAMENT PREPARATION METHOD 1: *Preparation of core-sheath filaments used in Examples 1-7 (EX1-EX7)*

Films of non-tacky sheaths were prepared by hot melt pressing pellets of LPDE (or other film formers) to average

thickness of 7-10 mils (0.1778-0.254 mm) in a Carver press at 140°C. Rectangles of film 3.77 cm in width and 7-15 cm in length were cut and hand rolled to encircle a hot melt PSA formulation to yield a core/sheath filament 12 mm in diameter. Filament compositions are summarized in Table 2.

TABLE 2. Filament compositions

| Sample | Filament Preparation Method | Core | Sheath | Wt.-% Sheath |
|---|---|---|---|---|
| CE1 | N/A | C1 | None | 0.0 wt.-% |
| EX1 | 1 | C1 | ELVALOY 1330 | 5.0 wt.-% |
| EX2 | 1 | C1 | LDPE NA217000 | 5.7 wt.-% |
| EX3 | 1 | C1 | XN-287-CAY | 6.6 wt.-% |
| EX4 | 1 | C1 | 50:50 LA2250/LA4285 | 9.5 wt.-% |
| CE2 | N/A | C2 | None | 0.0 wt.-% |
| CE3 | N/A | C2 | None | 0.0 wt.-% |
| EX5 | 1 | C2 | LDPE NA217000 | 4.5 wt.-% |
| EX6 | 1 | C2 | XN-287-CAY | 6.0 wt.-% |
| EX7 | 1 | C2 | 50:50 LA2250/LA4285 | 6.5 wt.-% |
| N/A means not applicable | | | | |

CORE-SHEATH FILAMENT COMPOUNDING: *Preparation of compounded adhesive samples of Examples 1-7 (EX1-EX7)*

The batch preparation of core-sheath filament adhesives (i.e., the PSA resulting from the melting and blending of the core and sheath) was carried out using a Brabender Plasti-corder unit equipped with an electrically heated three-part mixer with a capacity of approximately 55 $cm^3$ and high shear counter-rotating blades. The mixer was preheated to 150°C and set at a mixing speed of 60 rpm and the core/sheath filament was added directly to the top of the mixing barrel as separate filaments totaling 50-52 g. The mixing operation was run for 5 minutes, at which time the mixture appeared homogeneous. After removal from the mixer, the bulk material was hot melt pressed on a Carver press at 140°C to yield a 5 mil thick adhesive film.

PREPARATION: *Comparative Example 1 (CE1)*

A 5 mil (125um) film of polydimethylsiloxane polyurea (SBC-1) pressure sensitive adhesive (PSA) was prepared by drying a solvated SBC-2 PSA formulation in a 15 mil Teflon tray in a fume hood for at least 6 hours and then further drying in a 90°C forced air oven over night. The following polymer had no detectable odor indicating that all ethyl acetate and toluene solvent had been driven off. The SBC-1 PSA was removed from the Teflon film and Carver pressed at 140°C between two sheets of LOPAREX 7350/7300 release liners with metal shims to achieve a 5 mil adhesive.

PREPARATION: *Comparative Example 2 (CE2)*

A 5 mil (125um) film of polydimethylsiloxane polyurea (SBC-1) pressure sensitive adhesive (PSA) was prepared by drying a solvated SBC-1 PSA formulation in a 15 mil Teflon tray in a fume hood for at least 6 hours and then further drying in a 90°C forced air oven over night. The following polymer had no detectable odor indicating that all ethyl acetate and toluene solvent had been driven off. The SBC-1 PSA was removed from the Teflon film and Carver pressed at 140°C between two sheets of LOPAREX 7350/7300 release liners with metal shims to achieve a 5 mil adhesive.

PREPARATION: *Comparative Example 3 (CE3)*

Samples were coated onto 2mil thick and 15.2 centimeter wide LOPAREX 7350/7300 release liner using a knife coater with a 12mil gap and then dried in a forced air oven at 70°C for 25 minutes. The PSA was laminated to 2 mil plasma-treated PET (Plasma-PET) with a rubber hand roller.

PREPARATION OF PEEL SAMPLES: *Preparation of samples used for peel testing against glass and steel of Examples 1-7 (EXI - EX7) and Comparative Examples 1-3 AND (CE1-CE3)*

The 6-7 inches (15-18 cm) diameter disk of 5 mil thick PSA prepared by Carver pressing between LOPAREX 7350/7300 release liners was then cut into 0.5" (12.5 mm) wide strips on a polyurethane cutting mat. The easier liner (LOPAREX 7300) was removed from the PSA and the PSA was laminated to 2 mil plasma-treated PET (Plasma-PET) with a rubber hand roller. The PSA was allowed to dwell on the Plasma-PET overnight and then the 2$^{nd}$ release liner was removed just prior to lamination onto glass or SS testing coupons/panels.

PREPARATION OF RELEASE AND READHESION / SUBSECUENT PEEL SAMPLES:

*Preparation of Comparative Examples 4-8 where the adhesive was placed against a release liner and allowed to dwell for 105 days at 23 °C and 50 percent relative humidity before testing*

The 6-7 inches (15-18 cm) diameter disk of 5 mil thick PSA prepared by Carver pressing between LOPAREX 7350/7300 release liners was then cut into 0.5" (12.5 mm) wide strips on a polyurethane cutting mat. The easier liner (LOPAREX 7300) was removed from the PSA and the PSA was laminated to 2 mil plasma-treated PET (Plasma-PET) with a rubber hand roller. The PSA was allowed to dwell on the Plasma-PET overnight and then the 2$^{nd}$ release liner was removed and one of three fluorosilicone release liners (1R82001, 1R88001 or FS05) from Table 1 was laminated against the exposed adhesive with a rubber hand roller to produce the Comparative Example sample. The adhesive dwelled against the fluorosilicone release liner for 105 days at 23 °C and 50 percent relative humidity before testing release. The exposed adhesive tape sample was then used for readhesion / subsequent adhesion testing against glass. Table 3 below details which release liner and compounded filament sample combination were used to make each of the Comparative Examples. Without this invention, the silicone adhesives would have to be delivered using a fluorosilicone or fluoropolymer release liner.

TABLE 3. Comparative examples made by putting a filament sample against a fluorosilicone release liner

| Sample | Release Liner | Compounded Filament Sample Used |
|---|---|---|
| CE4 | 1R82001 | CE1 |
| CE5 | 1R82001 | EX2 |
| CE6 | 1R82001 | EX3 |
| CE7 | FS05 | EX2 |
| CE8 | 1R88001 | EX2 |

RESULTS

*Melt Flow Index Values for Sheath Materials*

Table 4 shows the results of melt flow index values of sheath materials used in EX1-EX7.

TABLE 4. Melt flow index values for sheath materials

| Sheath | MFI Method | MFI (grams/ 10 min | Tensile Elongation (%) | Tensile Method | Dogbone thickness (mm) |
|---|---|---|---|---|---|
| ELVALOY 1330 | Literature | 3.0 | 682 | Tested Type IV specimen; ASTM Standard D638-10 | 1.75 |
| LDPE NA217000 | Literature | 5.6 | 550 | Literature Type IV specimen; ASTM D638 | Not specified |
| XN-287-CAY | Tested | 5.1 | 386 | Tested Type IV specimen; ASTM Standard D638-10 | 1.78 |
| KURARITY LA2250 | Tested | 22.7 | 380 | Literature ISO 37 | Not specified |

(continued)

| Sheath | MFI Method | MFI (grams/ 10 min | Tensile Elongation (%) | Tensile Method | Dogbone thickness (mm) |
|---|---|---|---|---|---|
| KURARITY LA4285 | Tested | 1.84 | 140 | Literature ISO 37 | Not specified |

*PSA Performance for Examples 1-7 (EX1-EX7) and Comparative Examples (CE1-CE3)*

Table 5 shows the results of compounded filament PSA performance for EX1-EX7 and CE1-CE3.

TABLE 5. PSA performance

| Sample | SS Peel (N/cm) | Glass Peel (N/cm) | SS Shear (min) |
|---|---|---|---|
| CE1 | 7.6 | 6.8 | > 10,000 |
| EX1 | 5.3 | 5.2 | > 10,000 |
| EX2 | 5.2 | 4.2 | > 10,000 |
| EX3 | 6.9 | 7.5 | > 10,000 |
| EX4 | 7.6 | 6.2 | > 10,000 |
| CE2 | 6.5 | 8.0 | 9943 |
| CE3 | 7.5 | 7.1 | 9435 |
| EX5 | 0.4 | 0.1 | > 10,000 |
| EX6 | 4.4 | 4.4 | 5758 |
| EX7 | 3.3 | 4.3 | > 10,000 |

*Release and readhesion / subsequent peel for Comparative Examples 4-8 (CE4-CE8) where the adhesive was placed against a fluorosilicone release liner*

Table 6 shows the release results of compounded filament PSAs that were placed against fluorosilicone release liners. Both release and readhesion were tested at two different speeds; 30.5 cm/min and 228.6 cm/min to show the effect of speed on release and readhesion. Adhesive samples had dwelled against the fluorosilicone release liners for 105d.

TABLE 6. Release from fluorosilicone release liners and readhesion/subsequent peel to glass after 105d CTH aging

| Sample | Liner Release 30.5cm/min (N/cm) | Glass Readhesion/ Peel 30.5cm/min (N/cm) | Liner Release 228.6cm/min (N/cm) | Glass Readhesion/Peel 228.6cm/min (N/cm) |
|---|---|---|---|---|
| CE4 | 0.642 | 7.826 | 1.901 | 8.207 |
| CE5 | 0.511 | 8.641 | 1.814 | 9.245 |
| CE6 | 0.325 | 7.357 | 1.173 | 9.972 |
| CE7 | 0.206 | 5.692 | 2.110 | 9.196 |
| CE8 | 0.023 | 4.172 | 0.130 | 7.657 |

**Claims**

**1.** A core-sheath filament comprising:

a) a core comprising a pressure-sensitive adhesive comprising

1) 45 to 80 weight percent of a silicone-containing block copolymer based on a total weight of the core, the silicone-containing block copolymer comprising a first block comprising a polydiorganosiloxane and a second block that is free of a silicone; and
2) 20 to 55 weight percent of a silicone tackifying resin based on the total weight of the core; and

b) a sheath surrounding the core, wherein the sheath comprises a non-tacky thermoplastic material that is free of a silicone;

wherein the core-sheath filament has a longest cross-sectional distance in a range of 1 to 20 millimeters.

**2.** The core-sheath filament of claim 1, wherein the silicone-containing block copolymer is a polydiorganosiloxane polyoxamide, polydiorganosiloxane polyurea, polydiorganosiloxane polyamide, or polydiorganosiloxane polyurethane.

**3.** The core-sheath filament of claim 1 or 2, wherein the silicone-containing block copolymer is a polydiorganosiloxane polyoxamide having at least two repeat units of Formula (II)

$$*\text{-NR}^4\text{-Q}^2\text{-NR}^4\text{-(CO)-(CO)-NR}^3\text{-Q}^1\text{-NR}^3\text{-(CO)-(CO)-}* \qquad \text{(II)}$$

wherein

$Q^1$ is a polydiorganosiloxane of formula $-R^2-Si(R^1)_2-[O-Si(R^1)_2]_n-O-Si(R^1)_2-R^2-$;
each $R^1$ is independently an alkyl, haloalkyl, aralkyl, substituted aralkyl, aryl, substituted aryl, or alkenyl;
each $R^2$ is independently an alkylene, arylene-alkylene, or a combination thereof;
each $R^3$ is independently hydrogen, alkyl, aralkyl, or aryl;
each $R^4$ is independently hydrogen, alkyl, or part of a ring structure with group $Q^2$
$Q^2$ is the residue of a diamine of formula $R^4HN-Q^2-NHR^4$ minus the two amino groups $-NHR^4$;
n is an integer in a range of 1 to 1500; and
an asterisk (*) indicates a bonding site to another group in the block copolymer.

**4.** The core-sheath filament of claim 1 or 2, wherein the silicone-containing block copolymer is a polydiorganosiloxane polyurea having at least two repeat units of Formula (III)

$$*\text{-NH-Q}^3\text{-NH-(CO)-NR}^3\text{-Q}^1\text{-NR}^3\text{-(CO)-}* \qquad \text{(III)}$$

wherein

$Q^1$ is a polydiorganosiloxane of formula $-R^2-Si(R^1)_2-[O-Si(R^1)_2]_n-O-Si(R^1)_2-R^2-$;
$R^1$ is independently an alkyl, haloalkyl, aralkyl, substituted aralkyl, aryl, substituted aryl, or alkenyl;
$R^2$ is independently an alkylene, arylene-alkylene, or a combination thereof;
$R^3$ is independently hydrogen, alkyl, aralkyl, or aryl;
$Q^3$ is the residue of a diisocyanate of formula $OCN-Q^3-NCO$ minus two isocyanato groups (-NCO);
n is an integer in a range of 1 to 1500; and
an asterisk (*) indicates a bonding site to another group in the block copolymer.

**5.** The core-sheath filament of claim 1 or 2, wherein the silicone-containing block copolymer is a polydiorganosiloxane polyamide having at least two repeat units of Formula (IV)

$$*\text{-Q}^4\text{-(CO)-NR}^4\text{-Q}^1\text{-NR}^4\text{-(CO)-}* \qquad \text{(IV)}$$

wherein

$Q^1$ is a polydiorganosiloxane of formula $-R^2-Si(R^1)_2-[O-Si(R^1)_2]_n-O-Si(R^1)_2-R^2-$;
$R^1$ is independently an alkyl, haloalkyl, aralkyl, substituted aralkyl, aryl, substituted aryl, or alkenyl;
$R^2$ is independently an alkylene, arylene-alkylene, or a combination thereof;
$R^3$ is independently hydrogen, alkyl, aralkyl, or aryl;
$Q^4$ is the residue of a diacid chloride of formula $Cl-(CO)-Q^4-(CO)-Cl$ minus the two -(CO)-Cl groups or a diester of formula $R^7O-(CO)-Q^4-(CO)-OR^7$ minus two $-(CO)-OR^7$ groups where $R^7$ is an alkyl;

n is an integer in a range of 1 to 1500; and
an asterisk (*) indicates a bonding site to another group in the block copolymer.

**6.** The core-sheath filament of claim 1 to 2, wherein the silicone-containing block copolymer is a polydiorganosiloxane polyurethane having at least two repeat units of Formula (V)

$$*\text{-NH-}Q^3\text{-NH-(CO)-O-}R^8\text{-X-(CO)-N}R^3\text{-}Q^1\text{-N}R^3\text{-(CO)-X-}R^8\text{-O-(CO)-}* \qquad \text{(V)}$$

$Q^1$ is a polydiorganosiloxane of formula $-R^2-Si(R^1)_2-[O-Si(R^1)_2]_n-O-Si(R^1)_2-R^2-$;
$R^1$ is independently an alkyl, haloalkyl, aralkyl, substituted aralkyl, aryl, substituted aryl, or alkenyl;
$R^2$ is independently an alkylene, arylene-alkylene, or a combination thereof;
$R^3$ is independently hydrogen, alkyl, aralkyl, or aryl;
$Q^3$ is the residue of a diisocyanate of formula $OCN-Q^3-NCO$ minus two isocyanato groups (-NCO);
X is $-CH_2-$ or -O-;
$R^8$ is an alkylene;
n is an integer in a range of 1 to 1500; and
an asterisk (*) indicates a bonding site to another group in the block copolymer.

**7.** The core-sheath filament of any one of claims 1 to 6, wherein the pressure-sensitive adhesive has a glass transitions temperature no greater than 40°C.

**8.** The core-sheath filament of any one of claims 1 to 7, wherein the sheath exhibits a melt flow index of less than or equal to 15 grams per 10 minutes as determined using ASTM D1238-13 at 190 °C and with a load of 2.16 kilograms.

**9.** The core-sheath filament of any one of claims 1 to 8, wherein the core-sheath filament comprises 1 to 10 weight percent sheath and 90 to 99 weight percent core based on a total weight of the core-sheath filament.

**10.** A method of making a core-sheath filament, the method comprising:

a) forming a core composition that is a pressure sensitive adhesive comprising

1) 45 to 80 weight percent of a silicone-based block copolymer based on a total weight of the core, the silicone-containing block copolymer comprising a first block comprising a polydiorganosiloxane and a second block that is free of a silicone; and
2) 20 to 55 weight percent of a silicone tackifying resin based on the total weight of the core;

b) forming a sheath composition comprising a non-tacky thermoplastic material that is free of a silicone; and
c) wrapping the sheath composition around the core composition the core-sheath filament, wherein the core-sheath filament has a longest cross-sectional distance in a range of 1 to 20 millimeters.

**11.** The method of claim 10, wherein the wrapping the sheath composition around the core composition comprises co-extruding the core composition and the sheath composition such that the sheath composition surrounds the core composition.

**12.** The method of claim 10 or 11, wherein the core-filament comprises 90 to 99 weight percent core and 1 to 10 weight percent sheath based on a total weight of the core-sheath filament.

**13.** A method of printing a pressure-sensitive adhesive, the method comprising:

a) forming a core-sheath filament according to any one of claim 10 to 12;
b) melting and mixing the core-sheath filament to form a molten composition; and
c) dispensing the molten composition through a nozzle onto a substrate, wherein the substrate is not a release liner.

## Patentansprüche

**1.** Ein Kern-Hülle-Filament, umfassend:

a) einen Kern, der einen Haftklebstoff umfasst, umfassend

1) zu 45 bis 80 Gew.-% ein silikonhaltiges Blockcopolymer, bezogen auf ein Gesamtgewicht des Kerns, wobei das silikonhaltige Blockcopolymer einen ersten ein Polydiorganosiloxan umfassenden Block umfasst und einen zweiten kein Silikon aufweisenden Block umfasst; und
2) zu 20 bis 55 Gew.-% klebrigmachendes Silikon-Harz, bezogen auf das Gesamtgewicht des Kerns; und

b) eine den Kern umgebende Hülle, wobei die Hülle ein nicht klebriges thermoplastisches Material umfasst, das kein Silikon aufweist;

wobei im Querschnitt die längste Strecke des Kern-Hülle-Filaments 1 bis 20 Millimeter beträgt.

**2.** Das Kern-Hülle-Filament nach Anspruch 1, wobei das silikonhaltige Blockcopolymer ein Polydiorganosiloxan-Polyoxamid, Polydiorganosiloxan-Polyharnstoff, Polydiorganosiloxan-Polyamid oder Polydiorganosiloxan-Polyurethan ist.

**3.** Das Kern-Hülle-Filament nach Anspruch 1 oder 2, wobei das silikonhaltige Blockcopolymer ein mindestens zwei Wiederholungseinheiten aufweisendes Polydiorganosiloxan-Polyoxamid der Formel (II) ist

$$*\text{-NR}^4\text{-Q}^2\text{-NR}^4\text{-(CO)-(CO)-NR}^3\text{-Q}^1\text{-NR}^3\text{-(CO)-(CO)-}* \quad \text{(II)}$$

wobei

$Q^1$ ein Polydiorganosiloxan der Formel $-R^2-Si(R^1)_2-[O-Si(R^1)_2]_n-O-Si(R^1)_2-R^2$-ist;
jedes $R^1$ unabhängig voneinander ein Alkyl, Haloalkyl, Aralkyl, substituiertes Aralkyl, Aryl, substituiertes Aryl oder Alkenyl ist;
jedes $R^2$ unabhängig voneinander ein Alkylen, Arylen-Alkylen oder eine Kombination davon ist;
jedes $R^3$ unabhängig voneinander Wasserstoff, Alkyl, Aralkyl oder Aryl ist;
jedes $R^4$ unabhängig voneinander Wasserstoff, Alkyl oder Teil einer Ringstruktur mit einer Gruppe $Q^2$ist;
$Q^2$ der Rest eines Diamins der Formel $R^4HN-Q^2-NHR^4$ minus die beiden Aminogruppen $-NHR^4$ ist;
n eine ganze Zahl in einem Bereich von 1 bis 1500 ist; und
ein Sternchen (*) eine Bindungsstelle mit einer anderen Gruppe im Blockcopolymer markiert.

**4.** Das Kern-Hülle-Filament nach Anspruch 1 oder 2, wobei das silikonhaltige Blockcopolymer ein mindestens zwei Wiederholungseinheiten aufweisendes Polydiorganosiloxan-Polyharnstoff der Formel (III) ist

$$*\text{-NH-Q}^3\text{-NH-(CO)-NR}^3\text{-Q}^1\text{-NR}^3\text{-(CO)-}* \quad \text{(III),}$$

wobei

$Q^1$ ein Polydiorganosiloxan der Formel $-R^2-Si(R^1)_2-[O-Si(R^1)_2]_n-O-Si(R^1)_2-R^2$-ist;
$R^1$ unabhängig voneinander ein Alkyl, Haloalkyl, Aralkyl, substituiertes Aralkyl, Aryl, substituiertes Aryl oder Alkenyl ist;
$R^2$ unabhängig voneinander ein Alkylen, Arylen-Alkylen oder eine Kombination davon ist;
$R^3$ unabhängig voneinander Wasserstoff, Alkyl, Aralkyl oder Aryl ist;
$Q^3$ der Rest eines Diisocyanats der Formel $OCN-Q^3-NCO$ minus die beiden Isocyanat-Gruppen (-NCO) ist;
n eine ganze Zahl in einem Bereich von 1 bis 1500 ist; und
ein Sternchen (*) eine Bindungsstelle mit einer anderen Gruppe im Blockcopolymer markiert.

**5.** Das Kern-Hülle-Filament nach Anspruch 1 oder 2, wobei das silikonhaltige Blockcopolymer ein mindestens zwei Wiederholungseinheiten aufweisendes Polydiorganosiloxan-Polyamid der Formel (IV) ist

$$*\text{-Q}^4\text{-(CO)-NR}^4\text{-Q}^1\text{-NR}^4\text{-(CO)-}* \quad \text{(IV)}$$

wobei

$Q^1$ ein Polydiorganosiloxan der Formel $-R^2-Si(R^1)_2-[O-Si(R^1)_2]_n-O-Si(R^1)_2-R^2$-ist;
$R^1$ unabhängig voneinander ein Alkyl, Haloalkyl, Aralkyl, substituiertes Aralkyl, Aryl, substituiertes Aryl oder

Alkenyl ist;
$R^2$ unabhängig voneinander ein Alkylen, Arylen-Alkylen oder eine Kombination davon ist;
$R^3$ unabhängig voneinander Wasserstoff, Alkyl, Aralkyl oder Aryl ist;
$Q^4$ der Rest eines Disäurechlorids der Formel Cl-(CO)-$Q^4$-(CO)-Cl minus zwei -(CO)-Cl-Gruppen oder ein Diester der Formel $R^7$O-(CO)-$Q^4$-(CO)-O$R^7$ minus zwei -(CO)-O$R^7$-Gruppen, bei denen $R^7$ ein Alkyl ist, ist;
n eine ganze Zahl in einem Bereich von 1 bis 1500 ist; und
ein Sternchen (*) eine Bindungsstelle mit einer anderen Gruppe im Blockcopolymer markiert.

**6.** Das Kern-Hülle-Filament nach Anspruch 1 oder 2, wobei das silikonhaltige Blockcopolymer ein mindestens zwei Wiederholungseinheiten aufweisendes Polydiorganosiloxan-Polyurethan der Formel (V) ist

$$*\text{-NH-}Q^3\text{-NH-(CO)-O-}R^8\text{-X-(CO)-N}R^3\text{-}Q^1\text{-N}R^3\text{-(CO)-X-}R^8\text{-O-(CO)-}* \qquad (V)$$

$Q^1$ ein Polydiorganosiloxan der Formel -$R^2$-Si($R^1$)$_2$-[O-Si($R^1$)$_2$]$_n$-O-Si($R^1$)$_2$-$R^2$-ist;
$R^1$ unabhängig voneinander ein Alkyl, Haloalkyl, Aralkyl, substituiertes Aralkyl, Aryl, substituiertes Aryl oder Alkenyl ist;
$R^2$ unabhängig voneinander ein Alkylen, Arylen-Alkylen oder eine Kombination davon ist;
$R^3$ unabhängig voneinander Wasserstoff, Alkyl, Aralkyl oder Aryl ist;
$Q^3$ der Rest eines Diisocyanats der Formel OCN-$Q^3$-NCO minus die beiden Isocyanat-Gruppen (-NCO) ist;
X für -$CH_2$- oder -O- steht;
$R^8$ ein Alkylen ist;
n eine ganze Zahl in einem Bereich von 1 bis 1500 ist; und
ein Sternchen (*) eine Bindungsstelle mit einer anderen Gruppe im Blockcopolymer markiert.

**7.** Das Kern-Hülle-Filament nach einem der Ansprüche 1 bis 6, wobei der Haftklebstoff eine Glasübergangstemperatur aufweist, die nicht über 40 °C liegt.

**8.** Das Kern-Hülle-Filament nach einem der Ansprüche 1 bis 7, wobei die Hülle einen unter Verwendung von ASTM D 1238-13 bei 190 °C und mit einer Last von 2,16 Kilogramm bestimmten Schmelzflussindex von weniger als oder gleich 15 Gramm pro 10 Minuten aufweist.

**9.** Das Kern-Hülle-Filament nach einem der Ansprüche 1 bis 8, wobei das Kern-Hülle-Filament bezogen auf ein Gesamtgewicht des Kern-Hülle-Filaments 1 bis 10 Gew.-% Hülle und 90 bis 99 Gew.-% Kern umfasst.

**10.** Ein Verfahren zum Herstellen eines Kern-Hülle-Filaments, das Verfahren umfassend:

a) Bilden einer Kernzusammensetzung, bei der es sich um einen Haftklebstoff handelt, umfassend

1) zu 45 bis 80 Gew.-% ein Blockcopolymer auf Silikonbasis, bezogen auf ein Gesamtgewicht des Kerns, wobei das silikonhaltige Blockcopolymer einen ersten ein Polydiorganosiloxan umfassenden Block umfasst und einen zweiten kein Silikon aufweisenden Block umfasst; und
2) zu 20 bis 55 Gew.-% klebrigmachendes Silikon-Harz, bezogen auf das Gesamtgewicht des Kerns;

b) Bilden einer Hüllenzusammensetzung, die ein nicht klebriges thermoplastisches Material umfasst, das kein Silikon aufweist; und
c) Wickeln der Hüllenzusammensetzung um die Kernzusammensetzung das Kern-Hülle-Filament, wobei im Querschnitt die längste Strecke des Kern-Hülle-Filaments 1 bis 20 Millimeter beträgt.

**11.** Das Verfahren nach Anspruch 10, wobei das Wickeln der Hüllenzusammensetzung um die Kernzusammensetzung das Koextrudieren der Kernzusammensetzung und der Hüllenzusammensetzung umfasst, sodass die Hüllenzusammensetzung die Kernzusammensetzung umgibt.

**12.** Das Verfahren nach Anspruch 10 oder 11, wobei das Kern-Hülle-Filament, bezogen auf ein Gesamtgewicht des Kern-Hülle-Filaments, zu 90 bis 99 Gew.-% Kern und zu 1 bis 10 Gew.-% Hülle umfasst.

**13.** Ein Verfahren zum Drucken eines Haftklebstoffs, das Verfahren umfassend:

a) Bilden eines Kern-Hülle-Filaments nach einem der Ansprüche 10 bis 12;

b) Schmelzen und Mischen des Kern-Hülle-Filaments, sodass eine geschmolzene Zusammensetzung gebildet wird; und

c) Abgeben der geschmolzenen Zusammensetzung durch eine Düse auf ein Substrat, wobei das Substrat keine Abziehfolie ist.

## Revendications

**1.** Filament à âme-gaine comprenant :

a) une âme comprenant un adhésif sensible à la pression comprenant

1) 45 à 80 pour cent en poids d'un copolymère séquencé contenant de la silicone sur la base d'un poids total de l'âme, le copolymère séquencé contenant de la silicone comprenant une première séquence comprenant un polydiorganosiloxane et une deuxième séquence qui est dépourvue d'une silicone ; et

2) 20 à 55 pour cent en poids d'une résine collante de silicone sur la base du poids total de l'âme ; et

b) une gaine entourant l'âme, dans lequel la gaine comprend un matériau thermoplastique non collant qui est dépourvu d'une silicone ;

dans lequel le filament à âme-gaine a une distance transversale de plus grande longueur dans une plage de 1 à 20 millimètres.

**2.** Filament à âme-gaine selon la revendication 1, dans lequel le copolymère séquencé contenant de la silicone est un polydiorganosiloxane polyoxamide, polydiorganosiloxane polyurée, polydiorganosiloxane polyamide, ou polydiorganosiloxane polyuréthane.

**3.** Filament à âme-gaine selon la revendication 1 ou 2, dans lequel le copolymère séquencé contenant de la silicone est un polydiorganosiloxane polyoxamide ayant au moins deux motifs de répétition de Formule (II)

$$*\text{-NR}^4\text{-Q}^2\text{-NR}^4\text{-(CO)-(CO)-NR}^3\text{-Q}^1\text{-NR}^3\text{-(CO)-(CO)-}* \qquad \text{(II)}$$

dans lequel

$Q^1$ est un polydiorganosiloxane de formule $-R^2-Si(R^1)_2-[O-Si(R^1)_2]_n-O-Si(R^1)_2-R^2-$ ;
chaque $R^1$ est indépendamment un alkyle, haloalkyle, aralkyle, aralkyle substitué, aryle, aryle substitué ou alcényle ;
chaque $R^2$ est indépendamment un alkylène, arylène-alkylène, ou une combinaison de ceux-ci ;
chaque $R^3$ est indépendamment hydrogène, alkyle, aralkyle ou aryle ;
chaque $R^4$ est indépendamment hydrogène, alkyle ou une partie d'une structure cyclique avec un groupe $Q^2$
$Q^2$ est le résidu d'une diamine de formule $R^4HN-Q^2-NHR^4$ moins les deux groupes amino $-NHR^4$ ;
n est un nombre entier dans une plage de 1 à 1500 ; et
un astérisque (*) indique un site de liaison à un autre groupe dans le copolymère séquencé.

**4.** Filament à âme-gaine selon la revendication 1 ou 2, dans lequel le copolymère séquencé contenant de la silicone est un polydiorganosiloxane polyurée ayant au moins deux motifs de répétition de Formule (II)

$$*\text{-NH-Q}^3\text{-NH-(CO)-NR}^3\text{-Q}^1\text{-NR}^3\text{-(CO)-}* \qquad \text{(III)}$$

dans lequel

$Q^1$ est un polydiorganosiloxane de formule $-R^2-Si(R^1)_2-[O-Si(R^1)_2]_n-O-Si(R^1)_2-R^2-$ ;
$R^1$ est indépendamment un alkyle, haloalkyle, aralkyle, aralkyle substitué, aryle, aryle substitué ou alcényle ;
$R^2$ est indépendamment un alkylène, arylène-alkylène ou une combinaison de ceux-ci ;
$R^3$ est indépendamment hydrogène, alkyle, aralkyle ou aryle ;
$Q^3$ est le résidu d'un diisocyanate de formule $OCN-Q^3-NCO$ moins deux groupes isocyanato (-NCO) ;
n est un nombre entier dans une plage de 1 à 1500 ; et
un astérisque (*) indique un site de liaison à un autre groupe dans le copolymère séquencé.

**5.** Filament à âme-gaine selon la revendication 1 ou 2, dans lequel le copolymère séquencé contenant de la silicone est un polydiorganosiloxane polyamide ayant au moins deux motifs de répétition de Formule (II)

$$*\text{-}Q^4\text{-(CO)-NR}^4\text{-}Q^1\text{-NR}^4\text{-(CO)-}* \qquad \text{(IV)}$$

dans lequel

$Q^1$ est un polydiorganosiloxane de formule $-R^2-Si(R^1)_2-[O-Si(R^1)_2]n-O-Si(R^1)_2-R^2-$ ;
$R^1$ est indépendamment un alkyle, haloalkyle, aralkyle, aralkyle substitué, aryle, aryle substitué ou alcényle ;
$R^2$ est indépendamment un alkylène, arylène-alkylène ou une combinaison de ceux-ci ;
$R^3$ est indépendamment hydrogène, alkyle, aralkyle ou aryle ;
$Q^4$ est le résidu d'un chlorure de diacide de formule $Cl-(CO)-Q^4-(CO)-Cl$ moins les deux groupes -(CO)-Cl ou un diester de formule $R^7O-(CO)-Q^4-(CO)-OR^7$ moins deux groupes $-(CO)-OR^7$ où $R^7$ est un alkyle ;
n est un nombre entier dans une plage de 1 à 1500 ; et
un astérisque (*) indique un site de liaison à un autre groupe dans le copolymère séquence.

**6.** Filament à âme-gaine selon la revendication 1 ou 2, dans lequel le copolymère séquencé contenant de la silicone est un polydiorganosiloxane polyuréthane ayant au moins deux motifs de répétition de Formule (V)

$$*\text{-NH-}Q^3\text{-NH-(CO)-O-}R^8\text{-X-(CO)-NR}^3\text{-}Q^1\text{-NR}^3\text{-(CO)-X-}R^8\text{-O-(CO)-}* \qquad \text{(V)}$$

$Q^1$ est un polydiorganosiloxane de formule $-R^2-Si(R^1)_2-[O-Si(R^1)_2]_n-O-Si(R^1)_2-R^2-$ ;
$R^1$ est indépendamment un alkyle, haloalkyle, aralkyle, aralkyle substitué, aryle, aryle substitué ou alcényle ;
$R^2$ est indépendamment un alkylène, arylène-alkylène ou une combinaison de ceux-ci ;
$R^3$ est indépendamment hydrogène, alkyle, aralkyle ou aryle ;
$Q^3$ est le résidu d'un diisocyanate de formule $OCN-Q^3-NCO$ moins deux groupes isocyanato (-NCO) ;
X est $-CH_2-$ ou -O- ;
$R^8$ est un alkylène ;
n est un nombre entier dans une plage de 1 à 1500 ; et
un astérisque (*) indique un site de liaison à un autre groupe dans le copolymère séquence.

**7.** Filament à âme-gaine selon l'une quelconque des revendications 1 à 6, dans lequel l'adhésif sensible à la pression a une température de transition vitreuse n'excédant pas 40 °C.

**8.** Filament à âme-gaine selon l'une quelconque des revendications 1 à 7, dans lequel la gaine présente un indice d'écoulement à l'état fondu inférieur ou égal à 15 grammes en 10 minutes tel que déterminé en utilisant ASTM D1238-13 à 190 °C et avec une charge de 2,16 kilogrammes.

**9.** Filament à âme-gaine selon l'une quelconque des revendications 1 à 8, dans lequel le filament à âme-gaine comprend 1 à 10 pour cent en poids de gaine et 90 à 99 pour cent en poids d'âme sur la base d'un poids total du filament à âme-gaine.

**10.** Procédé de fabrication d'un filament à âme-gaine, le procédé comprenant :

a) la formation d'une composition d'âme qui est un adhésif sensible à la pression comprenant

1) 45 à 80 pour cent en poids d'un copolymère séquencé à base de silicone sur la base d'un poids total de l'âme, le copolymère séquencé contenant de la silicone comprenant une première séquence comprenant un polydiorganosiloxane et une deuxième séquence qui est dépourvue d'une silicone ; et
2) 20 à 55 pour cent en poids d'une résine collante de silicone sur la base du poids total de l'âme ;

b) la formation d'une composition de gaine comprenant un matériau thermoplastique non collant qui est dépourvu d'une silicone ; et
c) l'enveloppement de la composition de gaine autour de la composition d'âme le filament à âme-gaine, dans lequel le filament à âme-gaine a une distance transversale de plus grande longueur dans une plage de 1 à 20 millimètres.

**11.** Procédé selon la revendication 10, dans lequel l'enveloppement de la composition de gaine autour de la composition

d'âme comprend la coextrusion de la composition d'âme et de la composition de gaine de telle sorte que la composition de gaine entoure la composition d'âme.

**12.** Procédé selon la revendication 10 ou 11, dans lequel l'âme-filament comprend 90 à 99 pour cent en poids d'âme et 1 à 10 pour cent en poids de gaine sur la base d'un poids total du filament à âme-gaine.

**13.** Procédé d'impression d'un adhésif sensible à la pression, le procédé comprenant :

a) la formation d'un filament à âme-gaine selon l'une quelconque de la revendication 10 à 12 ;
b) la fusion et le mélange du filament à âme-gaine pour former une composition fondue ; et
c) la distribution de la composition fondue à travers une buse sur un substrat, dans lequel le substrat n'est pas une feuille antiadhésive.

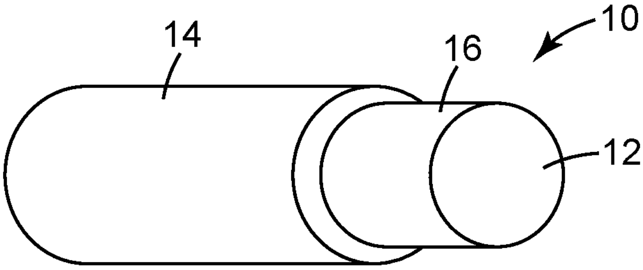


*Fig. 1*

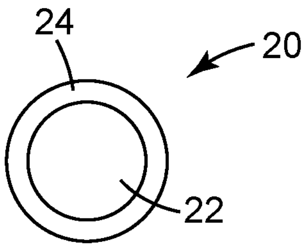


*Fig. 2*

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

### Patent documents cited in the description


- WO 02090628 A2
- US 7773834 B, Ouderkirk
- US 7501184 B, Leir
- US 8765881 B, Hays
- US 3890269 A, Martin
- US 4661577 A, Jo Lane
- US 5026890 A, Webb
- US 5276122 A, Aoki
- US 5214119 A, Leir
- US 5461134 A, Leir
- US 5512650 A, Leir
- US 6355759 B, Sherman
- US 6407195 B, Sherman
- US 6441118 B, Sherman
- US 6846893 B, Sherman
- US 7153924 B, Kuepfer
- WO 2014070604 A, Yang
- US 6569521 B
- US 4828871 A, Strobel


### Non-patent literature cited in the description


- **TURNER, B.N. et al.** A review of melt extrusion additive manufacturing processes: I. process design and modeling. *Rapid Prototyping Journal,* 2014, vol. 20/3, 192-204